(19) Europäisches Patentamt
European Patent Office
Office européen des brevets

(11) **EP 4 664 896 A1**

(12) **EUROPEAN PATENT APPLICATION**
published in accordance with Art. 153(4) EPC

(43) Date of publication:
**17.12.2025 Bulletin 2025/51**

(21) Application number: **24777428.4**

(22) Date of filing: **10.01.2024**

(51) International Patent Classification (IPC):
***H04N 21/43*** (2011.01)

(52) Cooperative Patent Classification (CPC):
**H04N 21/43; H04N 21/431; H04N 21/433**

(86) International application number:
**PCT/CN2024/071677**

(87) International publication number:
**WO 2024/198633 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.03.2023 CN 202310341966**

(71) Applicant: **Huawei Technologies Co., Ltd.
Shenzhen, Guangdong 518129 (CN)**

(72) Inventors:
• **REN, Wenjie
Shenzhen, Guangdong 518129 (CN)**
• **NI, Yintang
Shenzhen, Guangdong 518129 (CN)**
• **ZHANG, Yicheng
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **VIDEO SWITCHING METHOD AND ELECTRONIC DEVICE**

(57) This application provides a video switching method and an electronic device. The method includes: A second electronic device receives a first video stream sent by a first electronic device, where the first video stream is display data present when the first electronic device displays a window of a first application in a first state. The second electronic device may further receive a second video stream and first control information that are sent by the first electronic device, where the second video stream is display data present when the first electronic device displays the window of the first application in a second state, and the first control information is associated with a location of a first control in the window that is of the first application and that is displayed in the second state. The second electronic device can determine a transformation location of a first window based on first window information, the first control information, and second window information, to generate a switching animation effect, so that the second electronic device switches from displaying the window of the first application in the first state to displaying the window of the first application in the second state. In this way, smoothness of video stream switching by the second electronic device can be improved.

FIG. 9

## Description

This application claims priority to Chinese Patent Application No. 202310341966.0, filed with the China National Intellectual Property Administration on March 28, 2023 and entitled "VIDEO SWITCHING METHOD AND ELECTRONIC DEVICE", which is incorporated herein by reference in its entirety.

## TECHNICAL FIELD

This application relates to the field of electronic devices, and in particular, to a video switching method and an electronic device.

## BACKGROUND

With development of electronic devices, interaction between electronic devices is increasingly frequent. A multi-screen collaboration technology is a distributed technology that can implement cross-system and cross-device collaboration, to perform resource sharing, collaborative operations, and the like between electronic devices. Multi-screen collaboration, as one of main manners of interaction between electronic devices, can make up for disadvantages of the electronic devices, fully utilize advantages of different electronic devices, and further improve user experience.

For example, a collaborative operation connection is established between a first electronic device and a second electronic device. The first electronic device may transfer video data to the second electronic device in a manner of transmitting a video stream, to project a video played on the first electronic device to the second electronic device for display and playing.

However, when a display status of a window for playing the video stream on the first electronic device changes, for example, when the first electronic device switches from a landscape state to a portrait state, in a process in which the second electronic device switches a display status of a screen projection window, cases such as screen flickering, black screen, or stuttering easily occur in display content in the screen projection window, and consequently, video stream switching cannot be smoothly implemented.

## SUMMARY

Embodiments of this application provide a video switching method and an electronic device, which can be applied to a collaborative operation scenario in which a first electronic device performs screen projection to a second electronic device. Specifically, the first electronic device can transfer control information (such as location information) of a video playback control corresponding to a video stream to the second electronic device. When the first electronic device switches a display status of a window for playing the video stream (that is, when the video stream is switched), the second electronic device can determine, based on the control information, location information for transformation of a screen projection window, and may generate and display a switching animation effect, so that the second electronic device can smoothly implement video stream switching.

To achieve the foregoing objective, the following technical solutions are used in embodiments of this application.

According to a first aspect, a video switching method is provided. The method may be applied to a second electronic device. Specifically, the method includes: The second electronic device receives a first video stream sent by a first electronic device, where the first video stream is display data present when the first electronic device displays a window of a first application in a first state. Then, the second electronic device displays the first video stream in a first window in a display interface of the second electronic device. Next, the second electronic device may further receive a second video stream and first control information that are sent by the first electronic device. The second video stream is display data present when the first electronic device displays the window of the first application in a second state, the first control information is associated with a location of a first control in the window that is of the first application and that is displayed in the second state, and the first control is a control that is in the window of the first application and that is used to play a video. Then, the second electronic device can generate a switching animation effect based on first window information, the first control information, and second window information, so that the second electronic device switches from displaying the window of the first application in the first state to displaying the window of the first application in the second state. The first window information is associated with the first window, and the second window information is associated with a location of the window that is of the first application and that is displayed in the second state on the first electronic device. In addition, display content of the switching animation effect generated by the second electronic device is related to the first application. Finally, the second electronic device may display the first video stream in a second window of the display interface of the second electronic device after display of the switching animation effect is completed. The second window is associated with the second window information, in other words, a location and a size of the second window may be determined based on the second window information.

In the method, the second electronic device can receive the first control information sent by the first electronic device. In this way, when a status of the window that is of the first application and that is displayed on the first electronic device changes, in other words, when a video stream sent by the first electronic device to the first electronic device is switched from the first video stream to the second video stream, the second electronic device may determine a transformation location of the first window based on the first control information, the first window information, and the second window information, to generate and display the switching animation effect, so that the second electronic device can smoothly switch from displaying the window (that is, the first window) of the first application in the first state to displaying the window (that is, the second window) of the first application in the second state, thereby improving smoothness of video stream switching by the second electronic device.

With reference to the first aspect, in an optional implementation, the first control information is further associated with a size of the first control in the window that is of the first application and that is displayed in the second state.

In this implementation, the second electronic device may more accurately determine the transformation location and a size of the first window based on the first control information, to be specific, the location and the size of the first control in the window that is of the first application and that is displayed in the second state, so that smoothness of video stream switching by the second electronic device can be further improved.

With reference to the first aspect, in an optional implementation, the first window information is associated with at least one of a location or a size of the window that is of the first application and that is displayed in the first state on the first electronic device. In this case, before displaying the first video stream in the first window of the second electronic device, the method further includes: The second electronic device receives at least one of the location or the size, sent by the first electronic device, of the window that is of the first application and that is displayed in the first state on the first electronic device.

In this implementation, the second electronic device can more accurately determine the first window information based on at least one of the location or the size of the window that is of the first application and that is displayed in the first state on the first electronic device. Further, the second electronic device can accurately determine the location and the size of the first window based on the first window information, to display the first video stream in the first window, so that a function of projecting the first video stream to the second electronic device for display is implemented, and user experience is improved. In addition, the second electronic device may further more accurately determine a start location and a size of the switching animation effect based on the first window information, so that smoothness of video stream switching by the second electronic device can be further improved.

With reference to the first aspect, in an optional implementation, before the second electronic device generates the switching animation effect based on the first window information, the first control information, and the second window information, the method further includes: The second electronic device receives the location, sent by the first electronic device, of the window that is of the first application and that is displayed in the second state on the first electronic device.

In this way, the second electronic device can accurately determine the second window information based on the location of the window that is of the first application and that is displayed in the second state on the first electronic device. Further, when generating the switching animation effect, the second electronic device may determine, based on the second window information, an end location of a window for displaying the switching animation effect, to further improve smoothness of video stream switching by the second electronic device.

With reference to the first aspect, in an optional implementation, the second window information is further associated with a size of the window that is of the first application and that is displayed in the second state on the first electronic device In this case, before the second electronic device generates the switching animation effect based on the first window information, the first control information, and the second window information, the method further includes: The second electronic device receives the size, sent by the first electronic device, of the window that is of the first application and that is displayed in the second state on the first electronic device.

In this way, the second electronic device can accurately determine the second window information based on the size of the window that is of the first application and that is displayed in the second state on the first electronic device. Further, when generating the switching animation effect, the second electronic device may determine, based on the second window information, a size, at the end location, of the window for displaying the switching animation effect, to further improve smoothness of video stream switching by the second electronic device.

With reference to the first aspect, in an optional implementation, before the second electronic device receives the second video stream and the first control information that are sent by the first electronic device, the method further includes: The second electronic device receives a switching instruction.

In this implementation, the switching instruction may be sent by the first electronic device, and the switching instruction may be initiated by a user by using a switching operation. The switching instruction may indicate that the first electronic device undergoes a landscape/portrait state change, in other words, can enable the second electronic device to switch, in response to the switching instruction, from receiving the first video stream to receiving the second video stream, and receive the first control information to generate the switching animation effect, so that the second electronic device can smoothly implement video stream switching.

With reference to the first aspect, in an optional implementation, the first state is a landscape state, and the second state is a portrait state. In this case, the switching instruction indicates that the first electronic device switches from the landscape state to the portrait state.

With reference to the first aspect, in an optional implementation, that the second electronic device generates the switching animation effect based on the first window information, the first control information, and the second window information includes: The second electronic device scales down the first window based on the first window information and the first control information, where a size and a location of the scaled-down first window are associated with the first control information. Then, the second electronic device scales up the first window based on the second window information, where a size and a location of the scaled-up first window are associated with the second window information.

In this implementation, for the switching animation effect generated by the second electronic device, a changed size and location of the first window can be determined based on the first window information, the first control information, and the second window information, so that the first window may be first scaled down to the location and the size that are associated with the first control information, and then scaled up to the location and the size that are associated with the second control information. In this way, the switching animation effect can enable the second electronic device to smoothly switch from the first window to the second window in a dynamic change manner, so that smoothness of displaying the switching animation effect can be further improved.

With reference to the first aspect, in an optional implementation, that the second electronic device scales down the first window based on the first window information and the first control information includes: The second electronic device scales down the first window to a first point, where the first point is determined based on the first control information.

With reference to the first aspect, in an optional implementation, the first point is a central point of the first control in the window that is of the first application and that is displayed in the second state on the second electronic device. In this way, difficulty in generating the switching animation effect by the second electronic device can be reduced, and smoothness of the switching animation effect can be visually improved, thereby improving user experience.

With reference to the first aspect, in an optional implementation, when scaling down the first window, the second electronic device displays one or more of the following animation effects: rotation, fade-in and fade-out, and fly-in and fly-out; and when scaling up the first window, the second electronic device displays one or more of the following animation effects: rotation, fade-in and fade-out, and fly-in and fly-out.

In this implementation, when scaling down and scaling up a screen projection window, the second electronic device may further display a plurality of animation effects such as rotation, fade-in and fade-out, and fly-in and fly-out. In this way, diversity of changes of the switching animation effect generated by the second electronic device can be improved, and a display effect of the switching animation effect can be enhanced, thereby improving user experience.

With reference to the first aspect, in an optional implementation, the display content of the switching animation effect is one or more of a last-frame image of the first video stream, a first-frame image of the second video stream, a mask image, a preset image, and a preset video. In this way, continuity of the display content of the switching animation effect can be ensured, and smoothness of video stream switching by the second electronic device is further improved.

With reference to the first aspect, in an optional implementation, the method further includes: The second electronic device scales down the first window at a first speed, and then scales up the first window at a second speed. The first speed and the second speed may be determined based on a buffering capability and a decoding capability of the second electronic device. Specifically, the buffering capability of the second electronic device represents a capability of the second electronic device to buffer a video stream, and the decoding capability of the second electronic device represents a capability of the second electronic device to decode a video stream.

In this implementation, the second electronic device can respectively determine, based on the decoding capability and the buffering capability of the second electronic device, a speed of scaling down the screen projection window and a speed of scaling up the screen projection window, so that smoothness of a switching animation effect change can be further improved.

With reference to the first aspect, in an optional implementation, the method in which the second electronic device generates the switching animation effect based on the first window information, the first control information, and the second window information may specifically include: The second electronic device may determine a moving distance based on the first window information, the first control information, and the second window information. The second electronic device may also determine moving time based on the buffering capability and the decoding capability of the second electronic device. Finally, the second electronic device may determine the first speed and the second speed based on the moving distance and the moving time.

In this implementation, the second electronic device can estimate, based on the moving distance and the moving time of the switching animation effect, a moving speed of the switching animation effect. In this way, the second electronic device can determine the speed of scaling down the screen projection window and the speed of scaling up the screen projection window, to improve smoothness of the switching animation effect.

With reference to the first aspect, in an optional implementation, the moving distance includes a first distance and a second distance, and the moving time includes first time and second time. In this case, a specific method in which the second electronic device determines the first speed and the second speed based on the moving distance and the moving time may include: First, the second electronic device determines the first distance based on the first window information and the first control information, and determines the second distance based on the first control information and the second window information. Then, the second electronic device determines the first time based on the buffering capability of the second electronic device, and determines the second time based on the decoding capability of the second electronic device. Next, the second electronic device determines a first estimated speed based on the first distance and the first time, and determines a second estimated speed based on the second distance and the second time. Finally, when the first estimated speed is less than or equal to the second estimated speed, the second electronic device may determine that both the first speed and the second speed are the first estimated speed. When the first estimated speed is greater than the second estimated speed, the second electronic device may determine that both the first speed and the second speed are the second estimated speed. In this way, the second electronic device can reserve sufficient time to buffer and decode the second video stream after switching, to ensure that the second video stream after switching can be smoothly played after display of the switching animation effect is completed.

With reference to the first aspect, in an optional implementation, the moving distance includes a first distance and a second distance, and the moving time includes first time and second time. In this case, the specific method in which the second electronic device determines the first speed and the second speed based on the moving distance and the moving time may alternatively include: First, the second electronic device determines the first distance based on the first window information and the first control information, and determines the second distance based on the first control information and the second window information. Then, the second electronic device determines the first time based on the decoding capability of the second electronic device, determines the second speed based on the second distance and the first time, and then determines the second time based on the first distance and the second speed. Next, the second electronic device determines third time based on the buffering capability of the second electronic device. Finally, when the second time is greater than or equal to the third time, the second electronic device determines that the first speed is the same as the second speed. When the second time is less than the third time, the second electronic device determines the first speed based on the first distance and the third time. In this way, the second electronic device can ensure that there is sufficient time for buffering the second video stream after switching, so that the second video stream after switching can be smoothly played after display of the switching animation effect is completed.

According to a second aspect, a video switching method is provided. The method may be applied to a first electronic device. Specifically, the method includes: The first electronic device sends a first video stream, where the first video stream is display data present when the first electronic device displays a window of a first application in a first state. The first electronic device obtains first control information, where the first control information is associated with a location of a first control in the window that is of the first application and that is displayed in a second state, and the first control is a control that is in the window of the first application and that is used to play a video. Then, the first electronic device sends a second video stream and the first control information. The second video stream is display data present when the first electronic device displays the window of the first application in the second state, the first control information is used by a second electronic device to generate a switching animation effect, and the switching animation effect includes the second electronic device switching from displaying the window of the first application in the first state to displaying the window of the first application in the second state.

In the method, the first electronic device can obtain the first control information, and send the first control information to the second electronic device. In this way, when a status of the window that is of the first application and that is displayed on the first electronic device changes, in other words, when a video stream sent by the first electronic device to the first electronic device is switched from the first video stream to the second video stream, the second electronic device can determine a transformation location of a first window in a display interface of the second electronic device based on the first control information, to generate and display the switching animation effect, so that the second electronic device can smoothly switch from displaying the window (that is, the first window) of the first application in the first state to displaying the window (that is, the second window) of the first application in the second state, thereby improving smoothness of video stream switching by the second electronic device.

With reference to the second aspect, in an optional implementation, the first control information is further associated with a size of the first control in the window that is of the first application and that is displayed in the second state. In this way, the second electronic device can more accurately determine the transformation location and a size of the first window based on the first control information, to be specific, the location and the size of the first control in the window that is of the first application and that is displayed in the second state, so that smoothness of video stream switching by the second electronic device can be further improved.

With reference to the second aspect, in an optional implementation, before the first electronic device sends the second video stream and the first control information, the method further includes: The first electronic device obtains at least one of a location or a size of the window that is of the first application and that is displayed in the first state on the first electronic device. Then, the first electronic device sends at least one of the location or the size of the window that is of the first application and that is displayed in the first state on the first electronic device. At least one of the location or the size of the window that is of the first application and that is displayed in the first state on the first electronic device may be used to determine first window information, and the first window information may be used by the second electronic device to generate the switching animation effect.

With reference to the second aspect, in an optional implementation, before the first electronic device sends the second video stream and the first control information, the method further includes: The first electronic device obtains at least one of a location or a size of the window that is of the first application and that is displayed in the second state on the first electronic device. The first electronic device sends at least one of the location or the size of the window that is of the first application and that is displayed in the second state on the first electronic device. At least one of the location or the size of the window that is of the first application and that is displayed in the second state on the first electronic device is used to determine second window information, and the second window information is used by the second electronic device to generate the switching animation effect.

In this way, the second electronic device can accurately determine the second window information based on at least one of the location or the size of the window that is of the first application and that is displayed in the second state on the first electronic device. Further, the second electronic device may determine, based on the second window information, an end location of a window for displaying the switching animation effect, to improve smoothness of video stream switching by the second electronic device.

With reference to the second aspect, in an optional implementation, before the first electronic device sends the second video stream and the first control information, the method further includes: The first electronic device sends a switching instruction, where the switching instruction indicates that the first electronic device undergoes a landscape/portrait state change.

With reference to the second aspect, in an optional implementation, the first state is a landscape state, and the second state is a portrait state. In this case, the switching instruction indicates that the first electronic device switches from the landscape state to the portrait state.

According to a third aspect, a video switching apparatus is provided. The apparatus includes a receiving module, a display module, a control sensing module, and an animation effect control module. The receiving module is configured to receive a first video stream sent by a first electronic device, where the first video stream is display data present when the first electronic device displays a window of a first application in a first state. The display module is configured to display the first video stream in a first window of a second electronic device. The receiving module is further configured to receive a second video stream sent by the first electronic device, where the second video stream is display data present when the first electronic device displays the window of the first application in a second state. The control sensing module is configured to receive first control information sent by the first electronic device, where the first control information is associated with a location of a first control in the window that is of the first application and that is displayed in the second state. The first control is a control that is in the window of the first application and that is used to play a video. The animation effect control module is configured to generate a switching animation effect based on first window information, the first control information, and second window information, where the first window information is associated with the first window, and the second window information is associated with a location of the window that is of the first application and that is displayed in the second state on the first electronic device. Specifically, the switching animation effect includes the second electronic device switching from displaying the window of the first application in the first state to displaying the window of the first application in the second state, and display content of the switching animation effect is related to the first application. The display module is further configured to display the first video stream in a second window of the second electronic device after display of the switching animation effect is completed, where the second window is associated with the second window information.

According to a fourth aspect, a video switching apparatus is provided. The apparatus includes a sending module and a control sensing module. The sending module is configured to send a first video stream, where the first video stream is display data present when the first electronic device displays a window of a first application in a first state. The control sensing module is configured to obtain and send first control information, where the first control information is associated with a location of a first control in the window that is of the first application and that is displayed in a second state, and the first control is a control that is in the window of the first application and that is used to play a video. The first control information is used by a second electronic device to generate a switching animation effect, and the switching animation effect includes the second electronic device switching from displaying the window of the first application in the first state to displaying the window of the first application in the second state. The sending module is further configured to send a second video stream, where the second video stream is display data present when the first electronic device displays the window of the first application in the second state.

According to a fifth aspect, an electronic device is provided. The electronic device includes a memory and one or more processors, and the memory is coupled to the processor. The memory stores computer program code, the computer program code includes computer instructions, and when the computer instructions are executed by the processor, the electronic device is enabled to perform the method according to any one of the first aspect and the optional implementations of the first aspect, or the electronic device is enabled to perform the method according to any one of the second aspect and the optional implementations of the second aspect.

According to a sixth aspect, a computer-readable storage medium is provided. The computer-readable storage medium includes computer instructions. When the computer instructions are run on an electronic device, the electronic device is enabled to perform the method according to any one of the first aspect and the optional implementations of the first aspect, or the electronic device is enabled to perform the method according to any one of the second aspect and the optional implementations of the second aspect.

According to a seventh aspect, a computer program product is provided. When the computer program product runs on a computer, the computer is enabled to perform the method according to any one of the first aspect and the optional implementations of the first aspect, or the computer is enabled to perform the method according to any one of the second aspect and the optional implementations of the second aspect.

It may be understood that, for beneficial effects that can be achieved by the video switching apparatus in the third aspect, the video switching apparatus in the fourth aspect, the electronic device in the fifth aspect, the computer-readable storage medium in the sixth aspect, and the computer program product in the seventh aspect, refer to beneficial effects in any one of the first aspect and the possible design manners of the first aspect. Details are not described herein again.

**BRIEF DESCRIPTION OF DRAWINGS**

FIG. 1 is a diagram of a screen projection scenario according to an embodiment of this application;
FIG. 2 is a diagram of a principle of transferring video data according to a related technology;
FIG. 3 is a diagram of a principle of a video stream switching method according to a related technology;
FIG. 4 is a diagram 1 of a principle of a video switching method according to an embodiment of this application;
FIG. 5 is a diagram of a hardware structure of an electronic device according to an embodiment of this application;

FIG. 6 is a diagram of a software structure of an electronic device according to an embodiment of this application;
FIG. 7 is a diagram 2 of a principle of a video switching method according to an embodiment of this application;
FIG. 8 is a diagram 3 of a principle of a video switching method according to an embodiment of this application;
FIG. 9 is a schematic flowchart 1 of a video switching method according to an embodiment of this application;
FIG. 10 is a diagram of a display interface of a mobile phone according to an embodiment of this application;
FIG. 11 is a diagram of first control information according to an embodiment of this application;
FIG. 12A and FIG. 12B are a diagram of mapping first control information according to an embodiment of this application;
FIG. 13A to FIG. 13G are a diagram 1 of a switching animation effect according to an embodiment of this application;
FIG. 14A to FIG. 14F are a diagram 2 of a switching animation effect according to an embodiment of this application;
FIG. 15 is a diagram 4 of a principle of a video switching method according to an embodiment of this application;
FIG. 16 is a schematic flowchart 2 of a video switching method according to an embodiment of this application;
FIG. 17A to FIG. 17F are a diagram 3 of a switching animation effect according to an embodiment of this application;
FIG. 18A to FIG. 18E are a diagram 4 of a switching animation effect according to an embodiment of this application;
FIG. 19A and FIG. 19B are a diagram of a display interface of a mobile phone according to an embodiment of this application;
FIG. 20 is a diagram 1 of a structure of a video switching apparatus according to an embodiment of this application;
FIG. 21 is a diagram 2 of a structure of a video switching apparatus according to an embodiment of this application; and
FIG. 22 is a diagram of composition of a chip system according to an embodiment of this application.

**DESCRIPTION OF EMBODIMENTS**

The following describes technical solutions in embodiments of this application with reference to accompanying drawings in embodiments of this application. Unless otherwise specified, "/" in descriptions of this application represents an "or" relationship between associated objects. For example, A/B may represent A or B.

In this application, "and/or" is merely an association relationship for describing associated objects, and indicates that three relationships may exist. For example, A and/or B may indicate the following three cases: Only A exists, both A and B exist, and only B exists, where A and B may be singular or plural. In addition, in the descriptions of this application, unless otherwise specified, "a plurality of" means two or more than two. "At least one of the following items (pieces)" or a similar expression thereof refers to any combination of these items, including any combination of singular items (pieces) or plural items (pieces). For example, at least one of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions and purposes. A person skilled in the art may understand that the terms such as "first" and "second" do not limit a quantity and an execution sequence, and the terms such as "first" and "second" do not indicate a definite difference. In addition, in embodiments of this application, the term "example", "for example", or the like is used to represent giving an example, an illustration, or a description. Any embodiment or design scheme described with "example" or "for example" in embodiments of this application should not be explained as being more preferred or having more advantages than another embodiment or design scheme. Exactly, use of the term "example", "for example", or the like is intended to present a related concept in a specific manner for ease of understanding.

With development of electronic devices, intelligent degrees of electronic devices such as smartphones, notebook computers, tablet computers, and smart screens rapidly increase, and interaction between the electronic devices is increasingly frequent. A multi-screen collaboration technology is a distributed technology that can implement cross-system and cross-device collaboration, to perform resource sharing, collaborative operations, and the like between electronic devices. Multi-screen collaboration, as one of main manners of interaction between electronic devices, can make up for disadvantages of the electronic devices, fully utilize advantages of different electronic devices, and further improve user experience. For example, a smartphone has an advantage of portability, and is mainly used for daily communication and social interaction of a user. However, a screen of the smartphone is small. In an application scenario such as watching a video or playing a game, it is difficult for the user to achieve high use experience. Large-screen devices, such as computers, smart screens, and televisions, have advantages such as large screens and high display resolutions. Therefore, the user may project an image on the smartphone to another device (for example, a computer or a smart screen) in a window projection manner, to achieve high use experience.

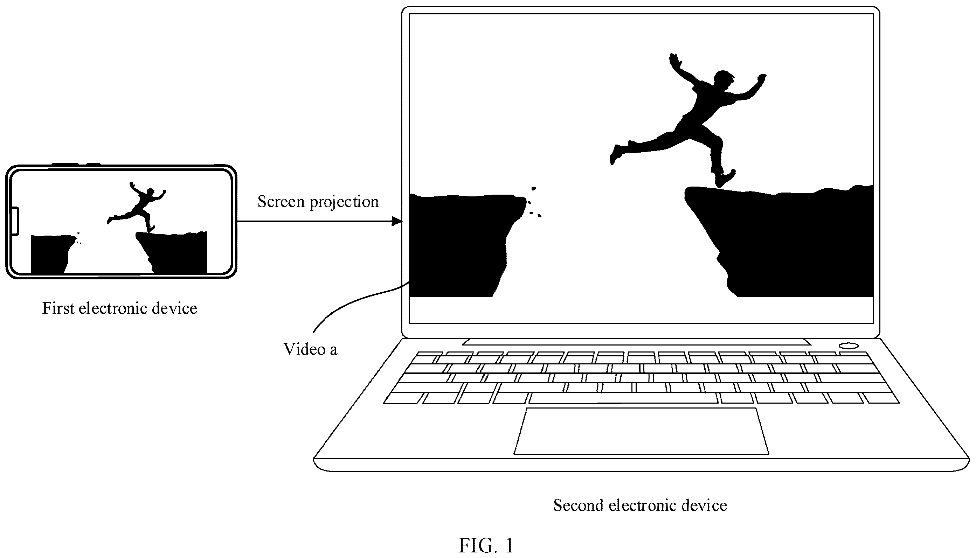

With reference to a screen projection scenario shown in FIG. 1, the user may project a video a played on a main control-side electronic device (referred to as a first electronic device below) to a large-screen device such as a collaboration-side electronic device (referred to as a second electronic device below) for display and playing. A playback interface of the video a on the second electronic device is larger. In this way, the user can achieve high video watching experience.

In an implementation, after a collaborative operation connection is established between the first electronic device and the second electronic device, the first electronic device may transfer video data to the second electronic device in a manner of transmitting a video stream. For example, the video data of the first electronic device may be transferred to the second electronic device in a form of the video stream by using a Miracast technology, an AirPlay technology, a HiSight technology, or the like.

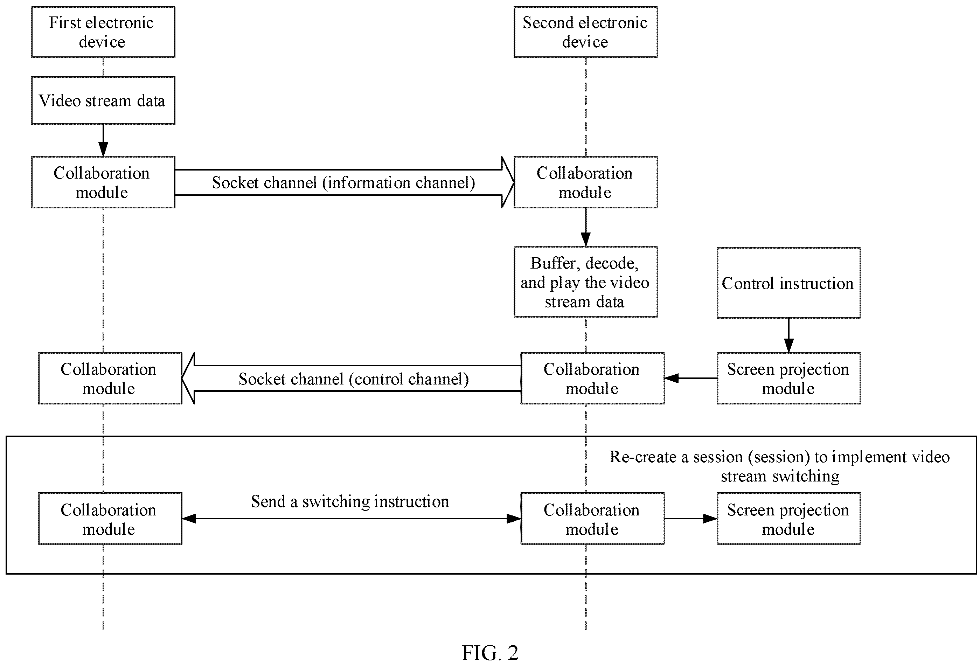

Specifically, FIG. 2 is a diagram of a principle of transferring video data according to a related technology. As shown in FIG. 2, a collaborative connection may be established between the first electronic device and the second electronic device through a collaboration module. For example, a socket (socket) channel may be established between the first electronic device and the second electronic device through the collaboration module, and the socket channel may be, for example, based on a multicast source discovery protocol (multicast source discovery protocol, MSDP), a HiSight protocol, or the like. The socket channel may be used as an information channel, and is used by the first electronic device to send video stream data to the second electronic device. Another socket channel may be further established between the first electronic device and the second electronic device as a control channel, and the control channel may be used by the second electronic device to send a control instruction to the first electronic device to implement control (or referred to as reverse control) on the first electronic device.

Specifically, when the first electronic device sends the video stream data to the second electronic device, first, the first electronic device may compress each frame of image of the video a, to obtain the video stream data including a plurality of video frames (that is, obtain the video stream data by encoding the video a). Then, the first electronic device sends the video stream data to the second electronic device on the socket channel (the information channel), and the second electronic device receives and buffers the video stream data, decodes the video stream data, and then plays the video a.

However, in a related technology of multi-screen collaboration, in a process of transferring the video stream data, the first electronic device does not transfer control information (for example, size information and location information) of a video playback control in a display interface of the first electronic device to the second electronic device, that is, the second electronic device cannot obtain the control information of the video playback control in the first electronic device. In this way, when a display status of a window for playing the video stream on the first electronic device changes, for example, when the window for playing the video stream on the first electronic device switches from a landscape state to a portrait state, in a process in which the second electronic device switches the display status of the screen projection window, cases such as screen flickering, black screen, or stuttering easily occur in display content in the screen projection window, and consequently, video stream switching cannot be smoothly implemented.

In this case, when the second electronic device does not complete decoding of a video stream after the display status changes, the second electronic device may usually use a preset image (for example, a mask image) as a transition between two video streams before and after the change, and play the video stream after decoding of the video stream after the change is completed. In this way, in a process of implementing video stream switching by the second electronic device, a phenomenon of screen flickering, image stretching, or stuttering easily occurs in a video image, and consequently the second electronic device cannot smoothly switch between the two video streams.

In an application scenario, an example in which the first electronic device performs landscape/portrait video stream switching in a collaborative operation application scenario of screen projection from the first electronic device to the second electronic device is used. Specifically, the first electronic device switches from playing a landscape video stream to playing a portrait video stream, in other words, a video stream sent by the first electronic device to the second electronic device is switched from the landscape video stream to the portrait video stream. The landscape video stream is a video stream played by the first electronic device in the landscape state, and the portrait video stream is a video stream played by the first electronic device in the portrait state.

Specifically, a screen of the first electronic device usually has two screen statuses: the landscape state and the portrait state. When the first electronic device is in the portrait state, the first electronic device displays a portrait interface. When the first electronic device is in the landscape state, the first electronic device displays a landscape interface. In this way, the first electronic device can present a normal angle of view of an application interface to the user in both the portrait state and the landscape state, so that the user can normally browse the application interface.

It should be noted that, a shape of the screen of the first electronic device is usually a rectangle. Therefore, in the screen statuses of the first electronic device, the landscape state is usually a status of the first electronic device present when a bottom of the screen (the bottom of the screen is a side indicated by a gravitational acceleration direction, that is, a side of the screen that is close to the ground) is a long side, and the portrait state is usually a status of the first electronic device present when the bottom of the screen is a short side. Alternatively, when a side, of the screen of the first electronic device, corresponding to the jaw or forehead of the user who is using the screen is a long side, the first electronic device is in the landscape state; or when a side, of the screen of the first electronic device, corresponding to the jaw or forehead of the user who is using the screen is a short side, the first electronic device is in the portrait state.

When the first electronic device is in the landscape state and displays the landscape interface, the user may rotate the first electronic device, so that the first electronic device switches from the landscape state to the portrait state after being rotated for a specific angle. Correspondingly, when the first electronic device is in the portrait state and displays the portrait interface, the user may also rotate the first electronic device, so that the first electronic device switches from the portrait state to the landscape state after being rotated for a specific angle.

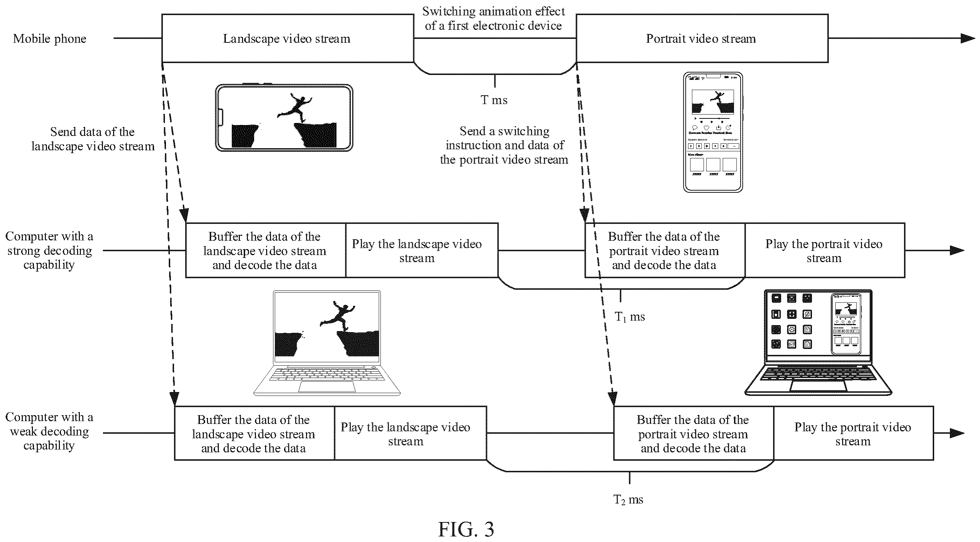

Refer to a diagram of a principle of video stream switching in a related technology shown in FIG. 3. An example in which the first electronic device is a mobile phone and the second electronic device is a computer is used. First, the mobile phone plays a landscape video stream (that is, the mobile phone plays the video stream in the landscape state), and sends the landscape video stream to the computer. The computer receives the landscape video stream, buffers and decodes the landscape video stream, and then plays a portrait video stream. Then, the mobile phone plays a portrait video stream after performing a switching animation effect for T milliseconds (ms) (that is, the mobile phone plays the video stream in the portrait state), and sends the portrait video stream to the computer. The computer receives the portrait video stream, buffers and decodes the portrait video stream, and then plays the portrait video stream. However, the mobile phone does not transfer, to the computer, control information of a video playback control in a window for playing the portrait video stream. Therefore, the computer cannot determine a transformation location of the switching animation effect between the portrait video stream and the landscape video stream, and consequently, the switching animation effect cannot be determined. In this case, the computer usually directly recreates a session (session) to receive the portrait video stream and switches to play the portrait video stream. In addition, due to impact of a decoding capability of the computer, an abnormal phenomenon such as screen flickering or stuttering may easily occur in an image in a video stream switching process.

Still refer to FIG. 3. For a computer with a strong decoding capability, a speed of decoding the portrait video stream is high, and decoding time $T_1$ is short. Therefore, the computer can quickly switch from playing the portrait video stream to playing the portrait video stream. As a result, a phenomenon of screen flickering easily occurs in an image in the video stream switching process. However, for a computer with a weak decoding capability, a speed of decoding the portrait video stream is low, and decoding time $T_2$ is long. Therefore, it takes a long time for the computer to switch from playing the portrait video stream to playing the portrait video stream. As a result, a phenomenon of stuttering easily occurs in an image in the video stream switching process. Consequently, the computer cannot smoothly implement video stream switching.

To resolve the problem that the collaboration-side electronic device (for example, the computer) cannot smoothly switch between two video streams in the application scenario of multi-screen collaboration, embodiments of this application provide a video switching method. In a collaborative operation scenario in which a main control-side electronic device performs screen projection to a collaboration-side electronic device, when a video stream of the main control-side electronic device is switched, that is, a display status of a window for playing the video stream changes, the collaboration-side electronic device can receive control information that is of a video playback control corresponding to a video stream after switching and that is sent by the main control-side electronic device, and determine, based on the control information, a transformation location of a screen projection window in a process in which the collaboration-side electronic device switches between two video streams, to generate and display a switching animation effect, so that the collaboration-side electronic device can smoothly switch between the two video streams.

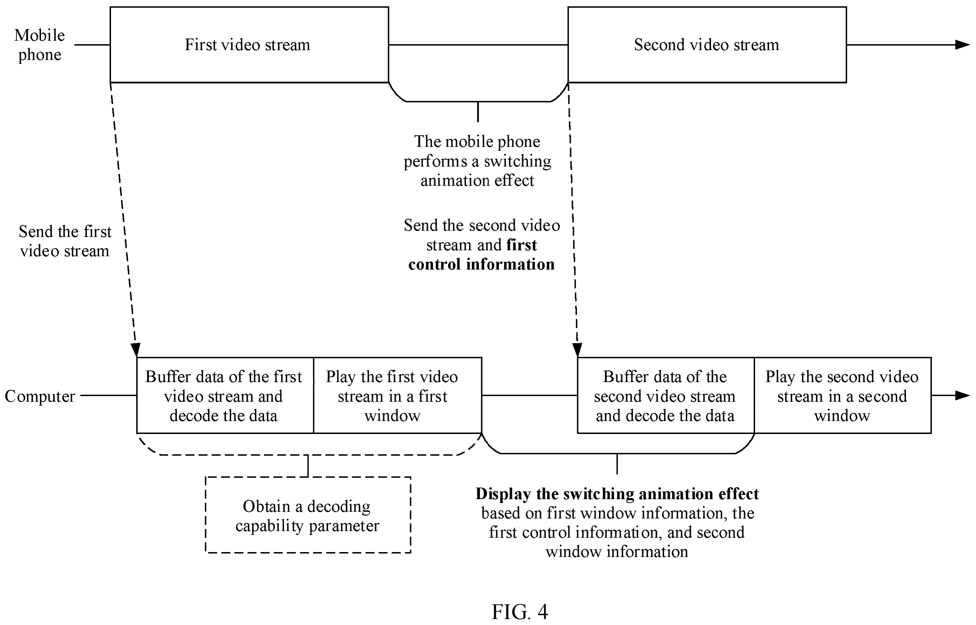

Specifically, FIG. 4 is a diagram of a principle of a video switching method according to an embodiment of this application. As shown in FIG. 4, an example in which the main control-side electronic device is a mobile phone, the collaboration-side electronic device is a computer, and the mobile phone switches from a first video stream to a second video stream is used. When playing the first video stream, the mobile phone sends the first video stream to the computer, where the first video stream is display data present when the mobile phone displays a window of a first application in a first state. The computer receives the first video stream, buffers and decodes the first video stream, and then plays the first video stream in a first window. After switching from playing the first video stream to playing the second video stream, that is, after switching from displaying the window of the first application in the first state to displaying the window of the first application in a second state, the mobile phone sends the second video stream and first control information to the computer. The second video stream is display data present when the mobile phone displays the window of the first application in the second state, the first control information is associated with a location of a first control in the window that is of the first application that is displayed in the second state, and the first control is a control that is in the window of the first application and that is used to play a video. In this way, the computer may determine a transformation location of the first window based on first window information, the first control information, and second window information, and generate and display a switching animation effect, so that the computer can smoothly switch from playing the first video stream to playing the second video stream.

In some embodiments, the computer may further obtain a decoding capability parameter of the computer, and determine, based on the decoding capability parameter, a transformation speed (or referred to as a moving speed) of the switching animation effect between the first video stream and the second video stream. This avoids an abnormal phenomenon such as screen flickering or stuttering in an image when the computer switches to the second video stream, and further improves smoothness of switching between the two video streams by the computer.

The video switching method provided in embodiments of this application may be applied to the foregoing application scenario in which the first electronic device performs screen projection to the second electronic device. For example, in embodiments of this application, the first electronic device and the second electronic device each may include but are not limited to a smartphone, a netbook, a tablet computer, a smartwatch, a smart band, a telephone watch, a smart camera, a palmtop computer, a personal computer (personal computer, PC), a personal digital assistant (personal digital assistant, PDA), a portable multimedia player (portable multimedia player, PMP), an augmented reality (augmented reality, AR)/virtual reality (virtual reality, VR) device, a television, a projection device, a motion sensing game console in a human-computer interaction scenario, or the like. Alternatively, the first electronic device and the second electronic device may be electronic devices of another type or structure. This is not limited in this application.

Usually, to maximum an advantage of a multi-screen collaborative operation technology, the multi-screen collaborative operation technology is mainly used between a portable device (that is, the first electronic device) and a large-screen device (that is, the second electronic device). For example, the portable device is a smartphone, and the large-screen device is a notebook computer. For another example, the portable device is a tablet computer, and the large-screen device is a television. Certainly, a specific device in a multi-window screen projection scenario is not limited in this application. As described above, the first electronic device and the second electronic device each may be any electronic device that supports the multi-screen collaborative operation technology, for example, a smartphone, a netbook, a tablet computer, a smartwatch, a smart band, a telephone watch, a smart camera, a palmtop computer, a PDA, a PMP, an AR/VR device, or a television.

In embodiments of this application, a wireless communication connection may be established between the first electronic device and the second electronic device in a manner such as "tap", "scan" (for example, scanning a QR code or a bar code), or "automatic discovery upon proximity" (for example, via Bluetooth or wireless fidelity (wireless fidelity, Wi-Fi)). The first electronic device and the second electronic device may comply with a wireless transmission protocol, and transmit information with each other through a wireless connection transceiver. The wireless transmission protocol may include but is not limited to a Bluetooth (Bluetooth, BT) transmission protocol, a Wi-Fi transmission protocol, or the like. For example, the Wi-Fi transmission protocol may be a Wi-Fi P2P transmission protocol. The wireless connection transceiver includes but is not limited to a Bluetooth transceiver and a Wi-Fi transceiver. Information transmission between the first electronic device and the second electronic device is implemented through wireless pairing. Information transmitted between the first electronic device and the second electronic device includes but is not limited to content data (for example a standard video stream) that needs to be displayed and a control instruction.

Alternatively, a wired communication connection may be established between the first electronic device and the second electronic device. For example, the wired communication connection is established between the first electronic device and the second electronic device through a video image adapter (video graphics array, VGA), a digital visual interface (digital visual interface, DVI), a high-definition multimedia interface (high-definition multimedia interface, HDMI), a data transmission line, or the like. Information transmission is implemented between the first electronic device and the second electronic device through the established wired communication connection. A specific connection manner between the first electronic device and the second electronic device is not limited in this application.

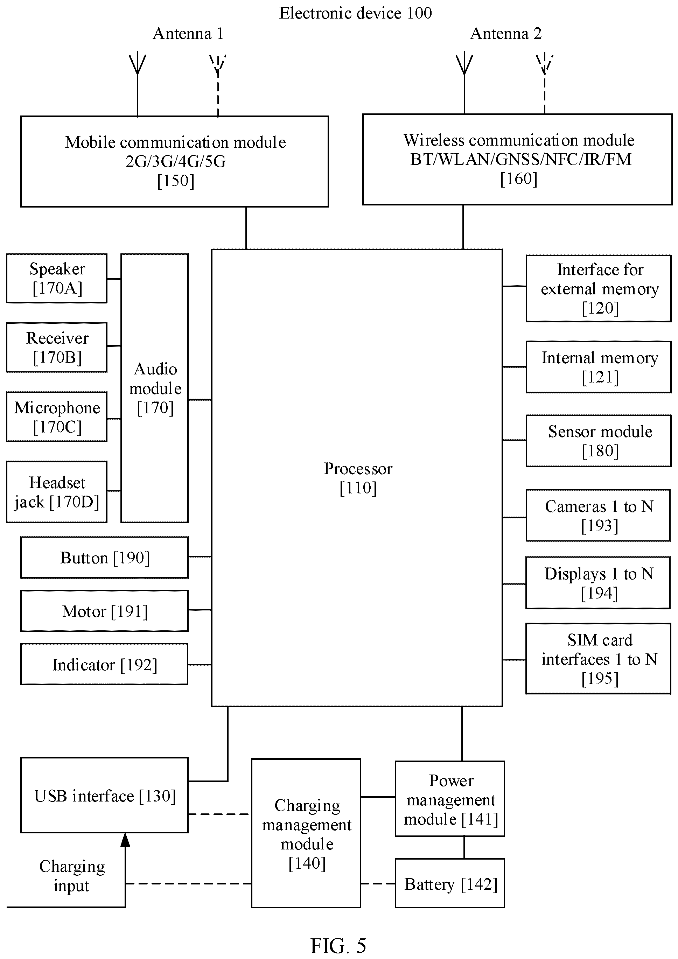

FIG. 5 is a diagram of a hardware structure of an electronic device 100. For example, the electronic device 100 shown in FIG. 5 may be a first electronic device, or may be a second electronic device.

As shown in FIG. 5, the electronic device 100 may include a processor 110, an interface for external memory 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like.

It may be understood that the structure shown in this embodiment of the present invention does not constitute a specific limitation on the electronic device 100. In some other embodiments of this application, the electronic device 100 may include more or fewer components than those shown in the figure, some components may be combined, or some components may be split, or different component arrangements may be used. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the electronic device 100. The controller may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 is a cache. The memory may store instructions or data that has just been used or is cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may be further multiplexed, to improve antenna utilization. For example, the antenna 1 may be multiplexed as a diversity antenna in a wireless local area network. In some other embodiments, the antenna may be used in combination with a tuning switch.

The mobile communication module 150 may provide a solution that is applied to the electronic device 100 and that is for wireless communication including 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and transmit the electromagnetic wave to the modem processor for demodulation. The mobile communication module 150 may further amplify a signal modulated by the modem processor, and convert the signal into an electromagnetic wave through the antenna 1 for radiation. In some embodiments, at least some functional modules of the mobile communication module 150 may be disposed in the processor 110. In some embodiments, at least some functional modules of the mobile communication module 150 may be disposed in a same component as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The baseband processor processes the low-frequency baseband signal, and then transfers an obtained signal to the application processor.

The wireless communication module 160 may provide a solution that is applied to the electronic device 100 and that is for wireless communication including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave through the antenna 2 for radiation.

For example, when the electronic device 100 is the first electronic device in the foregoing embodiment, the first electronic device may send a video stream, control information, a control instruction, and the like to a second electronic device through the antenna 1, the antenna 2, the mobile communication module 150, the wireless communication module 160, and the like.

For example, when the electronic device 100 is the second electronic device in the foregoing embodiment, the second electronic device may receive, through the antenna 1, the antenna 2, the mobile communication module 150, the wireless communication module 160, and the like, a video stream, control information, a control instruction, and the like that are sent by a first electronic device.

In some embodiments, the antenna 1 of the electronic device 100 is coupled to the mobile communication module 150, and the antenna 2 is coupled to the wireless communication module 160, so that the electronic device 100 may communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 implements a display function through the GPU, the display 194, the application processor, and the like. The GPU is a microprocessor for image processing, and is connected to the display 194 and the application processor. The GPU is configured to: perform mathematical and geometric calculation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

For example, when the electronic device 100 is the first electronic device in the foregoing embodiment, the display 194 of the first electronic device may display a video stream that a user chooses to play on the first electronic device. In addition, when the user taps or touches the screen, some functional controls, such as a switching control and a collaboration control, are further displayed.

For example, when the electronic device 100 is the second electronic device in the foregoing embodiment, the display 194 of the second electronic device may display a video stream that a user chooses to play on the first electronic device. In addition, during video stream switching, a switching animation effect may be further displayed. In addition, when the user taps or touches the screen, some functional controls, such as a switching control and a collaboration control, are further displayed.

The video codec is configured to compress or decompress a digital video. The electronic device 100 may support one or more video codecs. In this way, the electronic device 100 may play or record videos in a plurality of coding formats, for example, moving picture experts group (moving picture experts group, MPEG)-1, MPEG-2, MPEG-3, and MPEG-4.

The interface for external memory 120 may be configured to connect to an external memory card, for example, a micro SD card, to extend a storage capability of the electronic device 100. The external memory card communicates with the processor 110 through the interface for external memory 120, to implement a data storage function. For example, files such as music and a video are stored in the external storage card.

The internal memory 121 may be configured to store computer-executable program code. The executable program code includes instructions. The processor 110 runs the instructions stored in the internal memory 121, to perform various functional applications and data processing of the electronic device 100. The internal memory 121 may include a program storage area and a data storage area. The program storage area may store an operating system, an application program required by at least one function (for example, a sound playing function or an image playing function), and the like. The data storage area may store data (for example, audio data, and a phone book) created in a process of using the electronic device 100, and the like. In addition, the internal memory 121 may include a high-speed random access memory, and may further include a nonvolatile memory, for example, at least one magnetic disk storage component, a flash memory component, or a universal flash storage (universal flash storage, UFS).

For example, when the electronic device 100 is the second electronic device in the foregoing embodiment, through running of the instructions stored in the internal memory 121, the processor 110 may determine, based on first window information, first control information, and second window information, a transformation location of a screen projection window in a process of switching a first video stream to a second video stream, and generate and display a switching animation effect, so that the computer can smoothly switch between the two video streams.

The electronic device 100 may implement an audio function, for example, music playing and recording, through the audio module 170, the speaker 170A, the receiver 170B, the microphone 170C, the headset jack 170D, the application processor, and the like.

When the electronic device 100 displays video content, the audio module 170 may synchronously play audio content corresponding to the video content.

For example, when the electronic device 100 is the first electronic device in the foregoing embodiment, if the first electronic device displays content, the audio module 170 of the first electronic device may synchronously play audio content corresponding to the video content. If the first electronic device projects video content onto a second electronic device, the audio module 170 of the first electronic device may not play audio content corresponding to the video content.

For example, when the electronic device 100 is the second electronic device in the foregoing embodiment, if the second electronic device displays video content, the audio module 170 of the second electronic device may synchronously play audio content corresponding to the video content. If the second electronic device displays, in a screen projection scenario, video content projected by a first electronic device, the audio module 170 of the second electronic device may synchronously play audio content corresponding to the projected video content.

In some embodiments, when the video switching method in embodiments of this application is implemented based on the electronic device 100 shown in FIG. 5, when the electronic device 100 is the first electronic device or the second electronic device in the foregoing embodiment, an example in which the first electronic device performs screen projection to the second electronic device, and the first electronic device switches from playing a first video stream to playing a second video stream is used. Through running of instructions stored in an internal memory 121, a processor 110 of the first electronic device may obtain first control information, and send the second video stream and the first control information to the second electronic device through an antenna 1, an antenna 2, a mobile communication module 150, a wireless communication module 160, and the like. The second electronic device receives the second video stream and the first control information through an antenna 1, an antenna 2, a mobile communication module 150, a wireless communication module 160, and the like. A processor 110 of the second electronic device may determine a switching animation effect between the first video stream and the second video stream based on the first control information, first window information, and second window information by running instructions stored in an internal memory 121. Further, the second electronic device may perform the switching animation effect through the processor 110, and display the switching animation effect through a display 194.

A software system of the electronic device 100 may use a layered architecture, an event-driven architecture, a microkernel architecture, a micro service architecture, or a cloud architecture. In embodiments of the present invention, an Android system with a layered architecture is used as an example to describe a software structure of the electronic device 100.

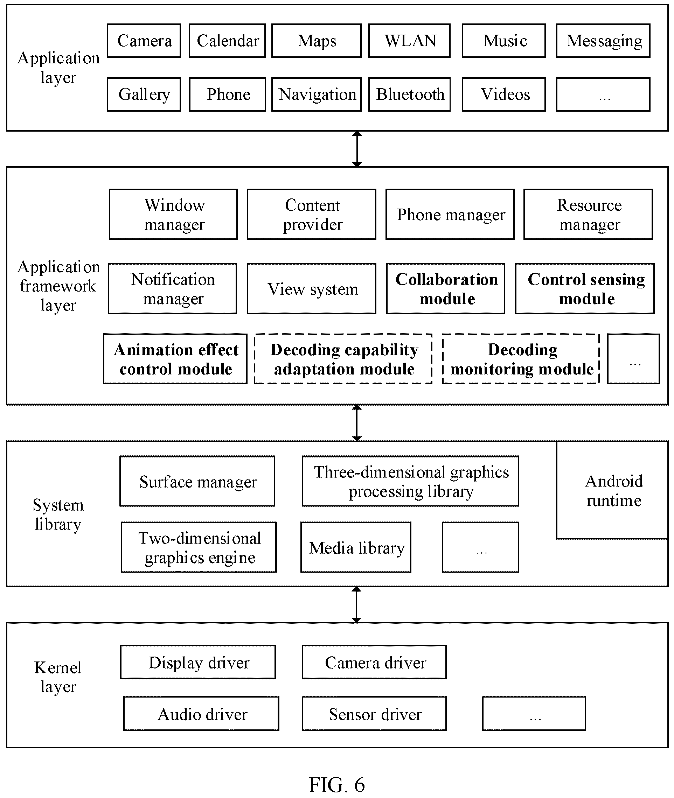

FIG. 6 is a block diagram of the software structure of the electronic device 100 according to an embodiment of the present invention.

In the layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 6, the application packages may include a short message service message application, a video application, an office application, a game application, a life application, a shopping application, a function application, or the like. Specifically, for example, the application packages may include applications such as Camera, Gallery, Calendar, Phone, Maps, Navigation, WLAN, Bluetooth, Music, Videos, and Messaging.

The application framework layer provides an application programming interface (application programming interface, API) and a programming framework for an application at the application layer. The application framework layer includes some predefined functions.

As shown in FIG. 6, the application framework layer may include a window manager, a content provider, a view system, a phone manager, a resource manager, a notification manager, a collaboration module, a control sensing module, an animation effect control module, and the like.

The collaboration module is configured to establish a collaborative operation connection to another electronic device, so that the electronic device implements a collaborative operation function.

The control sensing module is configured to obtain control information (for example, location information and size information of a control) corresponding to video stream playing in the electronic device, that is, information about a playback control used to play a video stream; and is further configured to transfer the control information to the electronic device, so that the electronic device can determine a transformation location of a switching animation effect based on the control information.

The animation effect control module is configured to determine location information of transformation of the switching animation effect based on the control information obtained by the control sensing module, to generate the switching animation effect.

In some embodiments, the application framework layer may further include a decoding capability adaptation module and a decoding monitoring module.

The decoding capability adaptation module is configured to obtain a decoding capability parameter of the electronic device, to determine a transformation speed of the switching animation effect based on the decoding capability parameter, so as to generate the switching animation effect.

The decoding monitoring module is configured to monitor an actual decoding capability parameter of the electronic device for a video stream when the electronic device displays the switching animation effect, to update the decoding capability parameter of the electronic device.

The animation effect control module may be further configured to determine the transformation speed of the switching animation effect based on the decoding capability parameter obtained by the decoding capability adaptation module, so that the switching animation effect can be used to smoothly switch between two video streams.

The window manager is configured to manage a window program. The window manager may obtain a size of the display, determine whether there is a status bar, perform screen locking, take a screenshot, and so on.

The content provider is configured to store and obtain data, and enable the data to be accessed by an application. The data may include a video, an image, audio, calls that are made and received, a browsing history and a browsing bookmark, an address book, and the like.

The view system includes visual controls such as a control for displaying a text and a control for displaying a picture. The view system may be configured to construct an application. A display interface may include one or more views. For example, a display interface including a short message service message notification icon may include a view for displaying text and a view for displaying a picture.

The phone manager is configured to provide a communication function for the electronic device 100, for example, management of a call status (including answering, declining, or the like).

The resource manager provides various resources such as a localized character string, an icon, a picture, a layout file, and a video file for an application.

The notification manager enables an application to display notification information in a status bar, and may be configured to convey a notification message. The notification information may automatically disappear after a short pause without requiring a user interaction. For example, the notification manager is configured to notify download completion and provide a message prompt. The notification manager may alternatively provide a notification that appears in a top status bar of the system in a form of a graph or a scroll bar text, for example, a notification of an application running in a background, or may provide a notification that appears on the screen in a form of a dialog window. For example, text information is prompted in the status bar, a prompt tone is made, the electronic device vibrates, or an indicator light blinks.

The Android runtime includes a core library and a virtual machine. The Android runtime is responsible for scheduling and management of the Android system.

The core library includes two parts: a function that needs to be called in Java language and a core library of Android.

The application layer and the application framework layer are run on the virtual machine. The virtual machine executes Java files at the application layer and the application framework layer as binary files. The virtual machine is configured to implement functions such as object life cycle management, stack management, thread management, security and exception management, and garbage collection.

The system library may include a plurality of functional modules, for example, a surface manager (surface manager), a media library (Media Libraries), a three-dimensional graphics processing library (for example, OpenGL ES), a 2D graphics engine (for example, SGL), and a screen projection module.

The surface manager is configured to manage a display subsystem and provide fusion of 2D and 3D layers for a plurality of applications.

The media library supports playback and recording in a plurality of commonly used audio and video formats, static image files, and the like. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The screen projection module is configured to perform screen projection by the electronic device 100 to another device, or is configured to receive screen projection data of the another device. The screen projection module may implement selection of a screen projection application, sending of screen projection data, receiving of screen projection data, display of screen projection data, and the like.

The kernel layer is a layer between hardware and software. The kernel layer includes at least a display driver, a camera driver, an audio driver, and a sensor driver. This is not limited in embodiments of this application.

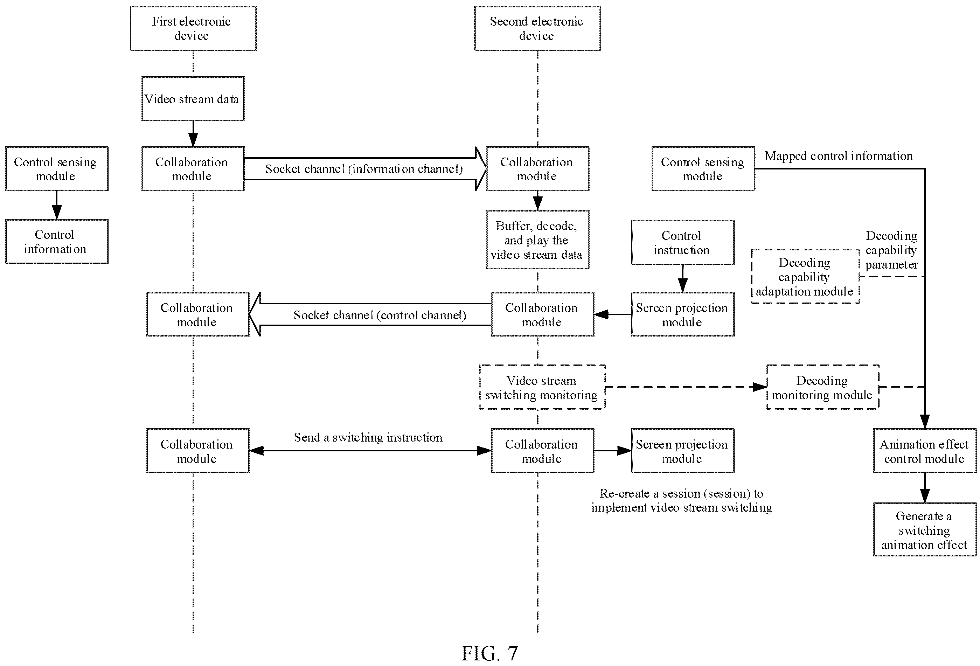

In some embodiments, when the video switching method in embodiments of this application is implemented based on the electronic device 100 shown in FIG. 6, when the electronic device 100 is the first electronic device or the second electronic device in the foregoing embodiment, an example in which the first electronic device performs screen projection to the second electronic device, and the first electronic device switches from a first video stream to a second video stream is used. With reference to a diagram of a principle shown in FIG. 7, the first electronic device and the second electronic device may establish a collaborative operation connection through coordination modules. The first electronic device can obtain first control information in the first electronic device through a control sensing module, and send the first control information to a control sensing module of the second electronic device. The control sensing module of the second electronic device receives the first control information, and sends the first control information to an animation effect control module. The animation effect control module may determine and display a switching animation effect between the first video stream and the second video stream based on the first control information, first window information, and second window information.

In some embodiments, when the second electronic device includes a decoding capability adaptation module and a decoding monitoring module, the decoding capability adaptation module of the second electronic device can obtain a decoding capability parameter of the second electronic device, and send the decoding capability parameter to the animation effect control module. The decoding monitoring module of the second electronic device can obtain an actual decoding capability parameter of the second electronic device for a video stream. The animation effect control module can determine and adjust a transformation speed of the switching animation effect based on the decoding capability parameter, to implement smooth switching between the first video stream and the second video stream.

The following describes the video switching method provided in embodiments of this application by using an example in which the first electronic device is a mobile phone and the second electronic device is a computer.

Both the mobile phone and the computer have a collaborative operation capability, and the mobile phone may project a video stream to the computer for playing. For example, the mobile phone switches from playing a landscape video stream (that is, the first video stream) to playing a portrait video stream (that is, the second video stream), in other words, a video stream sent by the mobile phone to the computer is switched from the landscape video stream to the portrait video stream. The landscape video stream is a video stream played by the mobile phone in a landscape state (that is, the second state), and the portrait video stream is a video stream played by the mobile phone in a portrait state (that is, the second state).

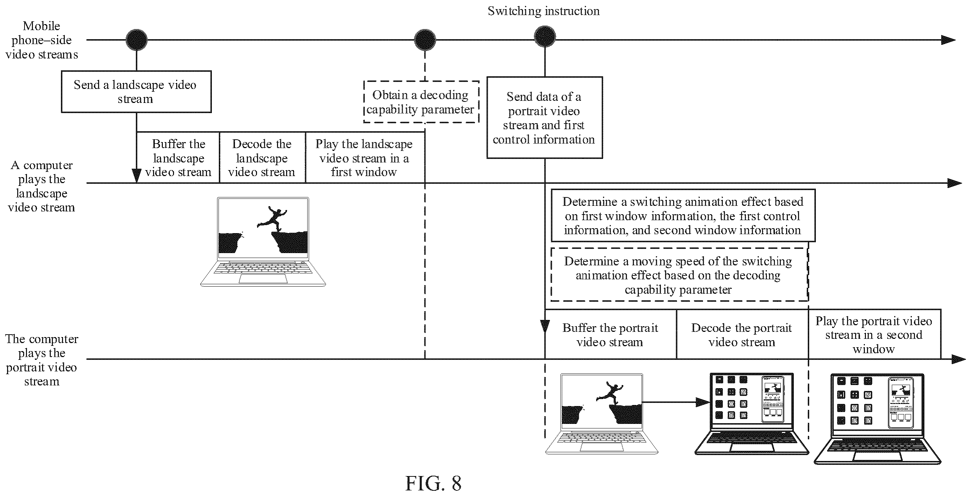

FIG. 8 is a diagram 3 of a principle of a video switching method according to an embodiment of this application. As shown in FIG. 8, first, when playing a landscape video stream, a mobile phone sends the landscape video stream to a computer. The computer displays the landscape video stream in a first window. After the mobile phone switches from playing the landscape video stream to playing a portrait video stream, the mobile phone sends the portrait video stream and first control information to the computer, where the first control information is associated with a location of a control that is in a window for playing the portrait video stream on the mobile phone and that is for playing a video. The computer can generate and display a switching animation effect based on first window information, the first control information, and second window information, so that the computer can smoothly switch from the landscape video stream to the portrait video stream.

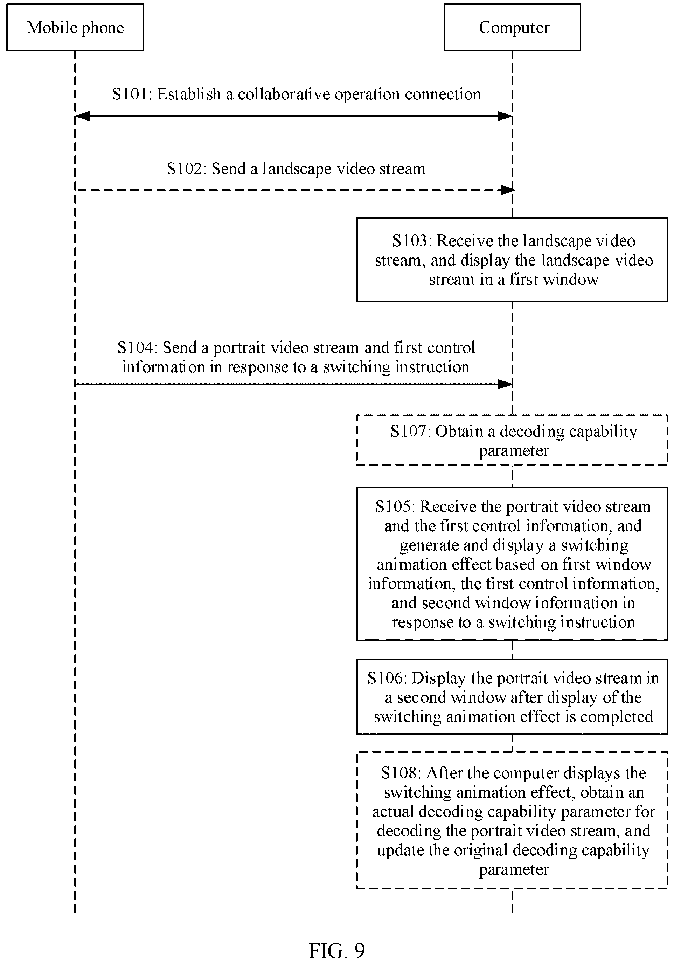

Specifically, FIG. 9 is a schematic flowchart 1 of a video switching method according to an embodiment of this application. As shown in FIG. 9, the video switching method provided in this embodiment of this application mainly includes S101 to S108.

S101: A mobile phone establishes a collaborative operation connection to a computer.

In this embodiment of this application, the mobile phone may establish the collaborative operation connection to the computer. Therefore, the mobile phone may send information such as a video stream to the computer, and the computer may receive and play the video stream, so that the mobile phone projects a video to the computer for playing. In this way, a collaborative operation between the mobile phone and the computer is implemented.

For example, the mobile phone may establish the collaborative operation connection to the computer based on a wireless connection manner such as a Bluetooth transmission protocol or a Wi-Fi transmission protocol or a wired connection manner such as an HDMI or a data transmission line. This is not specifically limited in this application.

In some embodiments, the mobile phone may establish an information channel with the computer to transmit a video stream. The mobile phone may further establish a control channel with the computer to transmit control-type information used to project a video stream.

S102: The mobile phone sends a landscape video stream to the computer.

In this embodiment of this application, when playing the landscape video stream, the mobile phone sends the landscape video stream to the computer. The landscape video stream may be video data provided by a first application, and the first application may be, for example, a video application or an information application. In this case, the mobile phone may display a window of the first application by using a display, and play the landscape video stream in the window. In other words, the landscape video stream is also display data present when the mobile phone displays the window of the first application in a landscape state.

It should be noted that, in embodiments of this application, that the mobile phone plays a landscape video stream means that the mobile phone plays a video stream in the landscape state (or referred to as a landscape interface or a landscape window). That the mobile phone plays a portrait video stream means that the mobile phone plays a video stream in a portrait state (or referred to as a portrait interface or a portrait window). That the mobile phone plays a landscape video stream means that the mobile phone plays a video stream in the landscape state (or referred to as a landscape interface or a landscape window).

Specifically, the landscape video stream may be encoded video data. For example, the landscape video stream may be encoded binary video stream data. In an implementation, the mobile phone may send the landscape video stream on the information channel established between the mobile phone and the computer.

In some embodiments, the mobile phone may further send first indication information to the computer. The first indication information may indicate a location and/or a size of a screen projection window for playing the landscape video stream on the computer. In this way, the computer can quickly generate the screen projection window to play the landscape video stream.

In an implementation, the first indication information may be a full-screen playback instruction. The full-screen playback instruction may instruct the computer to play the landscape video stream in a full-screen manner, to be specific, instruct the computer to generate a screen projection window that can fully cover a display interface of the computer, and play the landscape video stream in the screen projection window.

In another implementation, the first indication information may further indicate a location and/or a size of a window for displaying the landscape video stream on the mobile phone. The location and/or the size of the window for displaying the landscape video stream on the mobile phone may be used by the computer to determine the location and/or the size of the screen projection window, and generate the screen projection window to play the landscape video stream.

S103: The computer receives the landscape video stream, and displays the landscape video stream in a first window.

In this embodiment of this application, when the landscape video stream is the encoded video data, the computer may buffer and decode the received landscape video stream. Specifically, the computer receives and buffers data of the landscape video stream; and after data of the landscape video stream in a buffer of the computer is full, decodes the buffered data of the landscape video stream to obtain the decoded landscape video stream, and displays the landscape video stream in the screen projection window (that is, the first window).

A location and a size of the first window may be determined based on first window information. The first window information may include a size of the entire display interface (full screen) of the computer, and the first window information may be further associated with a location and/or a size of the window (that is, the window for playing the landscape video stream) that is of the first application and that is displayed on the mobile phone in the landscape state.

In an implementation, the first window information may be preset in the computer. For example, when the computer displays the landscape video stream in full screen, that is, the first window covers the entire display interface of the computer, the first window information preset in the computer may be the size of the entire display interface of the computer. In this way, when the mobile phone further sends the first indication information (for example, the full-screen playback instruction) to the computer in S102, the computer may generate the first window based on the preset first window information in response to the full-screen playback instruction, and play the landscape video stream in the full-screen manner.

In another implementation, the computer may further receive the location and/or the size, sent by the mobile phone, of the window for playing the landscape video stream on the mobile phone, and determine the first window information based on the location and/or the size of the window for playing the landscape video stream on the mobile phone. Because sizes of display interfaces of the mobile phone and the computer are different, locations of windows for playing the landscape video stream on the mobile phone and the computer are different, and sizes may also be different. Therefore, the computer may perform mapping transformation (for example, location offsetting or proportional scaling) on the received location and/or size of the window for playing the landscape video stream on the mobile phone, to determine the first window information. Further, the computer may generate the first window based on the first window information, to play the landscape video stream in the first window.

In this implementation, when receiving the landscape video stream, the computer may receive the location and/or the size of the window for playing the landscape video stream on the mobile phone. In other words, in S102, when sending the landscape video stream to the computer, the mobile phone may send the location and/or the size of the window for playing the landscape video stream on the mobile phone. Alternatively, before receiving the landscape video stream, the computer may further obtain, from the mobile phone, the location and/or the size of the window for playing the landscape video stream. In this way, the first window is generated in a timely manner to play the landscape video stream, to avoid stuttering during playing of the landscape video stream.

S104: The mobile phone sends a portrait video stream and first control information to the computer in response to a switching instruction.

In this embodiment of this application, the switching instruction may indicate that a status of a window for playing a video stream on the mobile phone changes, that is, the mobile phone switches between the landscape state and the portrait state, and a corresponding video stream also changes. Specifically, the switching instruction may indicate that the mobile phone switches from the landscape state to the portrait state, that is, switches from playing the landscape video stream to playing the portrait video stream.

In an example, the switching instruction may be generated by a user by initiating a switching operation on the mobile phone. For example, the user may tap a switching control on an interface of the mobile phone, to initiate the switching operation to the mobile phone, and generate the switching instruction. When the mobile phone is in the landscape state and displays a landscape interface, the user may further rotate the mobile phone, so that the mobile phone switches from the landscape state to the portrait state after being rotated for a specific angle, to initiate the switching operation to the mobile phone and generate the switching instruction. In this case, in response to the switching instruction, the mobile phone may further send the switching instruction to the computer, to trigger the computer to switch the video stream.

In another example, the switching instruction may alternatively be generated by a user by initiating a switching operation on the computer, and the computer sends the switching instruction to the mobile phone, to instruct the mobile phone to switch the video stream.

In this embodiment of this application, in response to the switching instruction, the mobile phone may switch from playing the landscape video stream to playing the portrait video stream. That is, in a collaborative operation scenario, a video stream sent by the mobile phone to the computer is switched from the landscape video stream to the portrait video stream, and the portrait video stream is display data present when the mobile phone displays the window of the first application in the portrait state.

The portrait video stream may be encoded video data. Specifically, the portrait video stream may be binary video stream data. In an implementation, the mobile phone may send the portrait video stream on the information channel established between the mobile phone and the computer.

In addition, when sending the portrait video stream to the computer, the mobile phone may further send the first control information. A first control is a control, in the window (that is, a window for playing the portrait video stream) that is of the first application and that is displayed on the mobile phone in the portrait state, used to play a video, and the first control information is associated with a location of the first control in the window for playing the portrait video stream on the mobile phone.

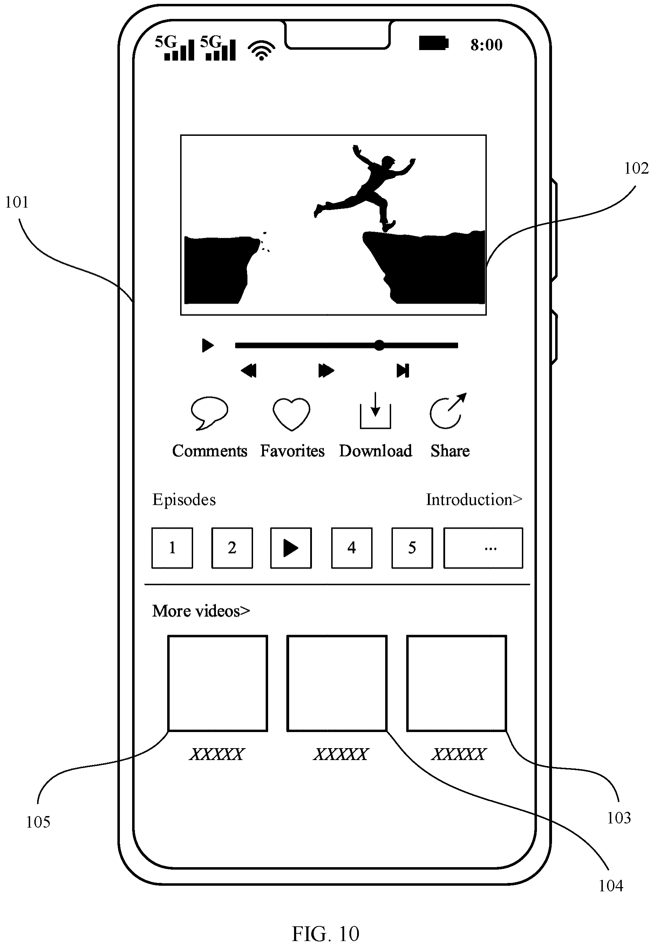

For example, FIG. 10 is a diagram of a display interface of the mobile phone according to an embodiment of this application. As shown in FIG. 10, in a window 101 that is of the first application and that is displayed on the mobile phone in the portrait state, a control used to play a video includes a playback control 102. In this case, the first control may be the playback control 102, the first control information may specifically include location information of the playback control 102, and the first control information may further include size information of the playback control 102. The first control information may be used by the computer to determine a change location of a switching animation effect.

In an implementation, when the first control has a rectangular shape, the first control information may be rectangle information of the first control.

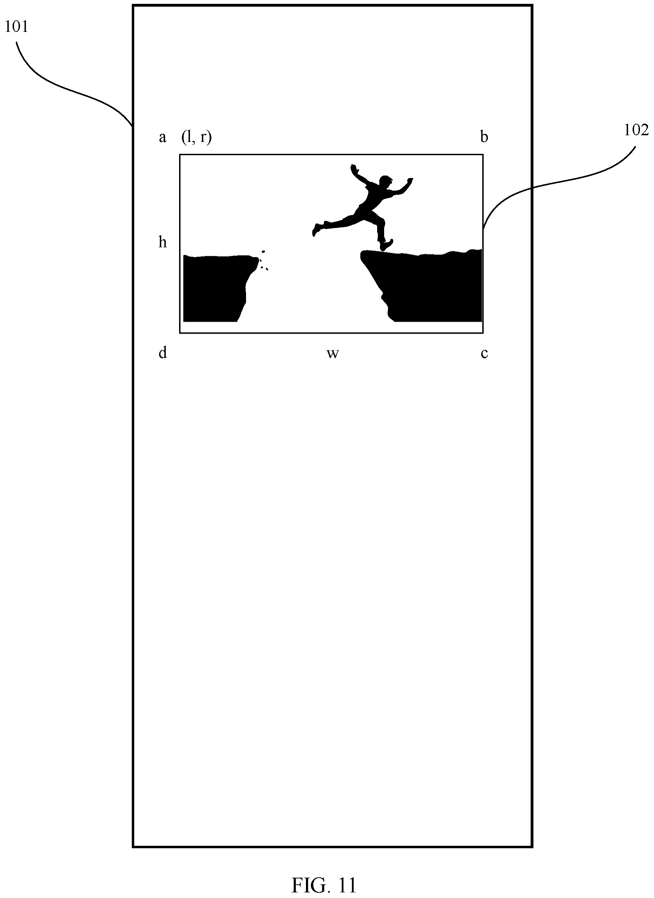

In an example, the first control information may be location information (for example, coordinate information) of a vertex of the first control (rectangle) and side lengths (for example, a width and a height) of the rectangle. FIG. 11 is a diagram of the first control information according to an embodiment of this application. As shown in FIG. 11, the first control information may be rectangle information $(l, r, w, h)$ combining coordinates $(l, r)$ of a vertex a of the rectangle, and the width (width, w) and the height (height, h) of the rectangle. The vertex a may alternatively be replaced with a vertex b, a vertex c, or a vertex d. This is not specifically limited in this application.

In another example, the first control information may alternatively be location information of any three vertices or four vertices of the first control (rectangle). For example, coordinates $(l_a, r_a)$ of a vertex a of the rectangle, coordinates $(l_b, r_b)$ of a vertex b, and coordinates $(l_c, r_c)$ of a vertex c may be combined into rectangle information $(l_a, r_a, l_b, r_b, l_c, r_c)$, that is, used as the first control information. A specific expression manner of the first control information is not specifically limited in this application.

In an implementation, the first control information may be obtained by a control sensing module in the mobile phone. Specifically, the control sensing module can detect a playback control in the window in the display interface of the mobile phone, and location information and size information of the playback control in the window of the first application, to generate the first control information.

In this case, the control sensing module may start running when a collaborative operation is triggered (that is, when the mobile phone establishes the collaborative operation connection to the computer in S101), or the control sensing module may start running before the collaborative operation is triggered, or the control sensing module may start running after the collaborative operation is triggered and before the first control information is sent. This is not specifically limited in this application.

In an implementation, when the control channel is established between the mobile phone and the computer, the mobile phone may send the first control information to the computer on the control channel.

In another implementation, an independent logical channel may be further opened between the mobile phone and the computer, and is used to send the first control information to the computer. In this way, because the independent logical channel is isolated from the information channel and the control channel, efficiency of transmitting the first control information can be ensured, and interference caused by the first control information to transmission of the portrait video stream can be avoided.

S105: The computer receives the portrait video stream and the first control information, and generates and displays the switching animation effect based on the first window information, the first control information, and second window information in response to a switching instruction.

In this embodiment of this application, when the portrait video stream is the encoded video data, the computer may buffer and decode the received portrait video stream. Specifically, the computer receives and buffers data of the portrait video stream; and after data of the portrait video stream in the buffer of the computer is full, decodes the buffered data of the portrait video stream to obtain the decoded portrait video stream, and may display the portrait video stream in a second window.

In addition, the computer may further map the received first control information, to obtain and store a screen projection location (that is, first mapped control information) of the first control in the computer, so that the computer determines location information of the video stream switching animation effect.

For example, after receiving the first control information, the computer may perform mapping transformation (for example, location offsetting or proportional scaling) on the received first control information based on a screen projection location of the window of the first application in the display interface of the computer, to obtain the first mapped control information and store the first mapped control information.

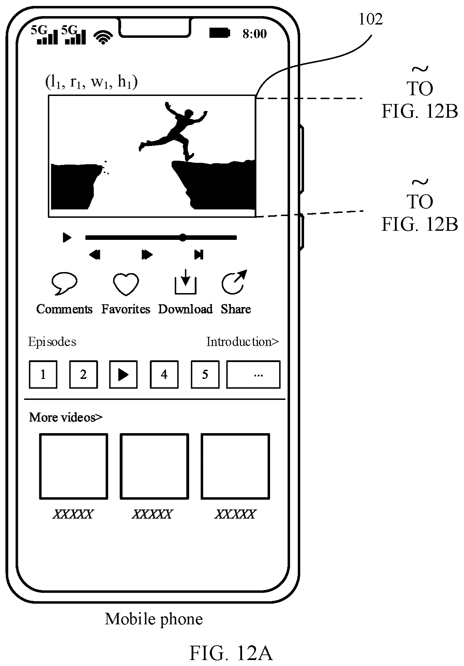

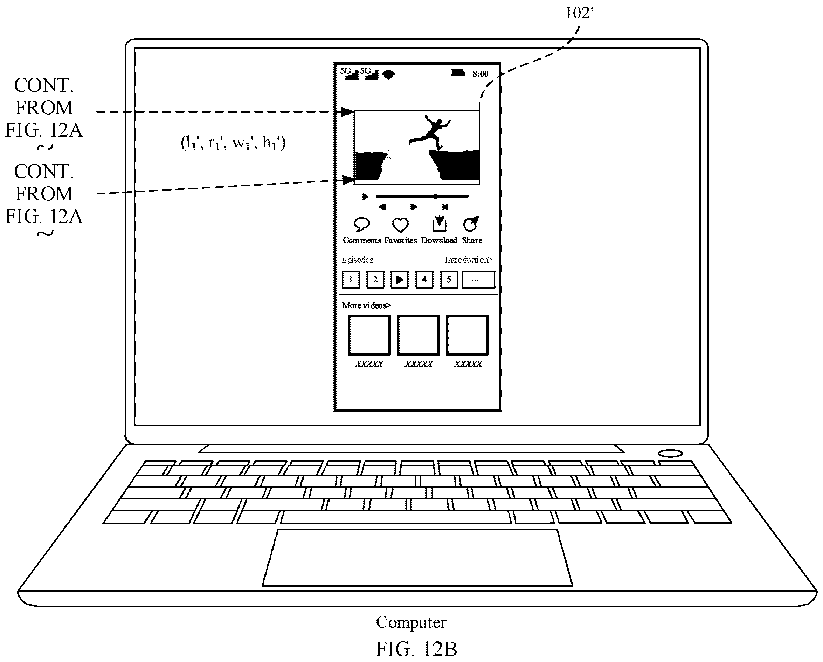

FIG. 12A and FIG. 12B are a diagram of mapping the first control information according to an embodiment of this application. As shown in FIG. 12A and FIG. 12B, an example in which the first control is a playback control 102 is used, and the first control information is rectangle information $(l_1, r_1, w_1, h_1)$. In this case, the first mapped control information obtained through mapping transformation is rectangle information $(l_1', r_1', w_1', h_1')$. If a size of the mapped first control does not change, $w_1'$ is the same as $w_1$, and $h_1'$ is the same as $h_1$. In this way, location information and size information of the first control on the display of the mobile phone may be converted into location information and size information on a display of the computer, so that the computer can accurately determine the location information of the video stream switching animation effect on the computer.

The second window is associated with the second window information, in other words, a location and a size of the second window may be determined based on the second window information. Specifically, the second window information is associated with a location and/or a size of the window (that is, the window for playing the portrait video stream) that is of the first application and that is displayed on the mobile phone in the portrait state. The second window information may be the same as the location and/or the size of the window for playing the portrait video stream on the mobile phone, and the second window information may alternatively be a location and/or a size obtained after mapping transformation is performed on the location and/or the size of the window for playing the portrait video stream on the mobile phone. An expression manner of the second window information is similar to that of the first control information. When the window for playing the portrait video stream on the mobile phone is a rectangle, the second window information may be rectangle information of the window for playing the portrait video stream on the mobile phone. A specific expression manner of the second window information is not specifically limited in this application.

In an implementation, the window for playing the portrait video stream on the mobile phone may be a display window of the entire display of the mobile phone. For example, as shown in FIG. 10, the window for playing the portrait video stream on the mobile phone may be the window 101, and a size of the window 101 may be size information of the entire display window of the mobile phone.

In another implementation, the computer may receive the location and/or the size, sent by the mobile phone, of the window for playing the portrait video stream on the mobile phone, and determine the second window information based on the location and/or the size of the window for playing the portrait video stream on the mobile phone. Then, the computer may further perform mapping transformation (for example, location offsetting or proportional scaling) on the received location and/or size of the window for playing the portrait video stream on the mobile phone, to determine the second window information. Further, the computer may regenerate the second window based on the second window information, to play the portrait video stream in the second window. Alternatively, the computer may further adjust the location and/or the size of the first window based on the second window information, and use an adjusted first window as the second window, that is, the second window is obtained by changing the first window, and does not need to be regenerated.

In this implementation, when receiving the portrait video stream, the computer may receive the location and/or the size of the window for playing the portrait video stream on the mobile phone. In other words, in S104, when sending the portrait video stream to the computer, the mobile phone may send the location and/or the size of the window for playing the portrait video stream on the mobile phone. Alternatively, before receiving the portrait video stream, the computer may further obtain, from the mobile phone, the location and/or the size of the window for playing the portrait video stream. In this way, the computer can generate the switching animation effect in a timely manner, to avoid stuttering in a process of switching to the portrait video stream.

In still another implementation, the computer may store the second window information. In this case, the location and/or the size of the window for playing the portrait video stream on the mobile phone do/does not need to be obtained through the mobile phone again. For example, before the mobile phone sends the landscape video stream to the computer in S102, for example, as described in the following S401 to S410, if there is a process in which the mobile phone switches from playing the portrait video stream to playing the landscape video stream, in other words, the screen projection window of the computer switches from playing the portrait video stream to playing the landscape video stream. Specifically, in S403, if the computer has received the location and/or the size of the window for playing the portrait video stream on the mobile phone, the computer may store the location and/or the size of the window for playing the portrait video stream on the mobile phone. In this case, the computer does not need to re-obtain the location and/or the size of the window for playing the portrait video stream on the mobile phone.

The computer may generate and display the switching animation effect in response to the switching instruction. The switching instruction may be generated by the user by initiating a switching operation on the mobile phone, and then sent by the mobile phone to the computer. The switching instruction may alternatively be generated by the user by initiating a switching operation on the computer. The switching instruction may indicate that a display status of a window (for example, the first window) for playing a video stream on the computer changes, to generate and display the switching animation effect.

Specifically, the computer may generate and display the switching animation effect based on the first window information, the first control information, and the second window information. The switching animation effect includes the computer switching from displaying the window of the first application in the landscape state to displaying the window of the first application in the portrait state, in other words, the computer changing from the first window for playing the landscape video stream to the second window for playing the portrait video stream.

In some embodiments, the computer may scale down or scale up the first window based on the first window information, the first control information, and the second window information, so that content displayed in the first window changes with a size of the first window, thereby forming the switching animation effect. Specifically, the switching animation effect generated by the computer may include: scaling down the first window based on the first window information and the first control information, where a size and a location of the scaled-down first window are associated with the first control information; and then scaling up the first window based on the second window information, where a size and a location of the scaled-up first window are associated with the second window information.

The size and the location of the scaled-down first window may be the same as a size and a location that are determined based on mapped first control information (that is, the first mapped control information), or the size and the location of the scaled-down first window may be a location and a size that are determined or a point determined based on the first mapped control information according to a first preset rule (for example, offsetting or scaling). The size and the location of the scaled-up first window may be the same as a size and a location that are determined based on the second window information, or the size and the location of the scaled-up first window may be a location and a size that are determined based on the second window information according to a second preset rule (for example, offsetting or scaling).

In an implementation, in the switching animation effect generated by the computer, the first window may be scaled down to a first point based on the first control information, and then the first window is scaled up from the first point. The first point is determined based on the first control information, and the first point may be a point determined based on the location and the size of the first control in the first control information and according to a preset rule.

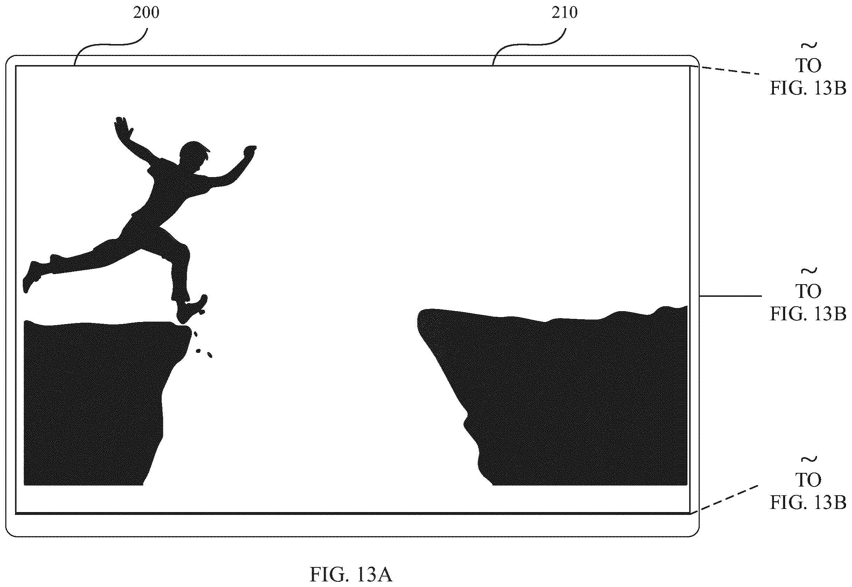

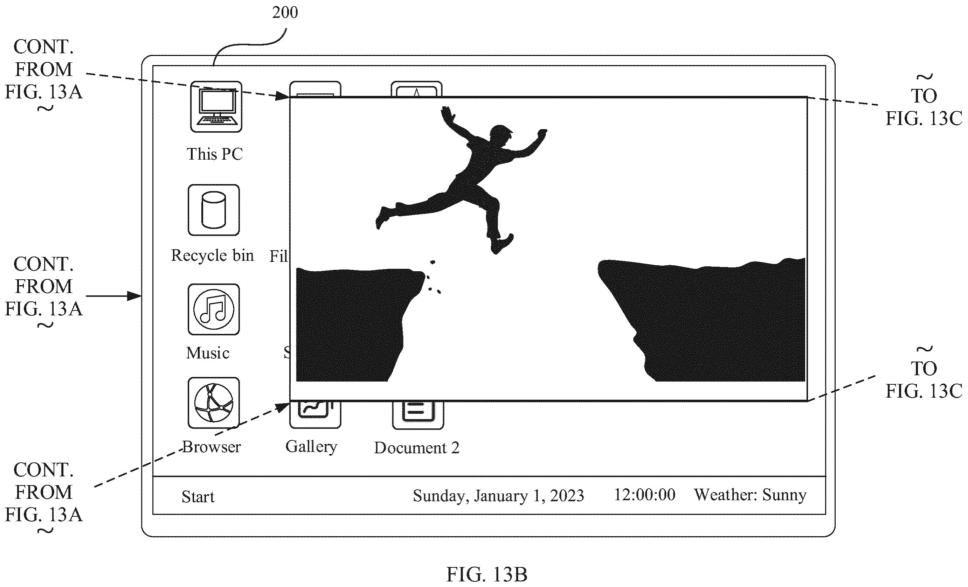

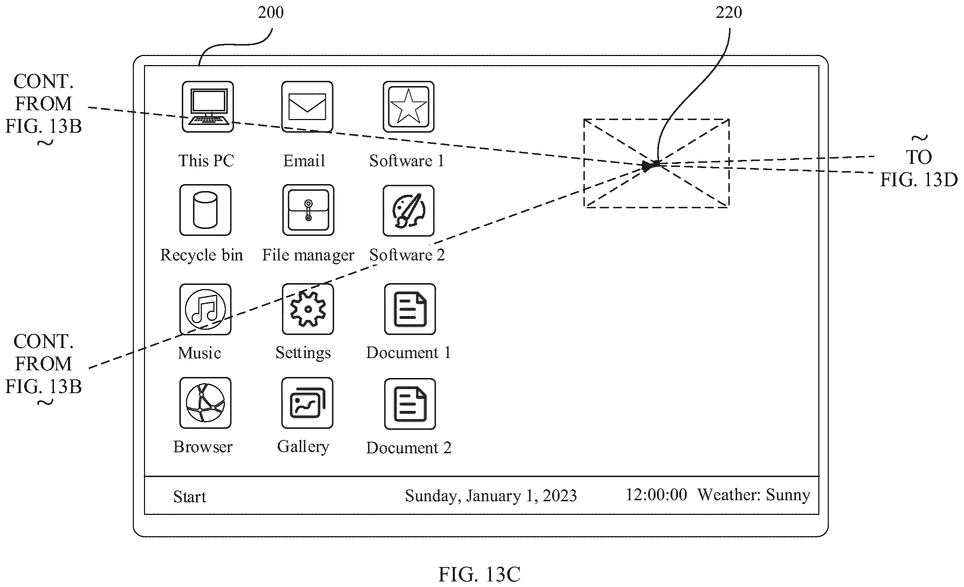

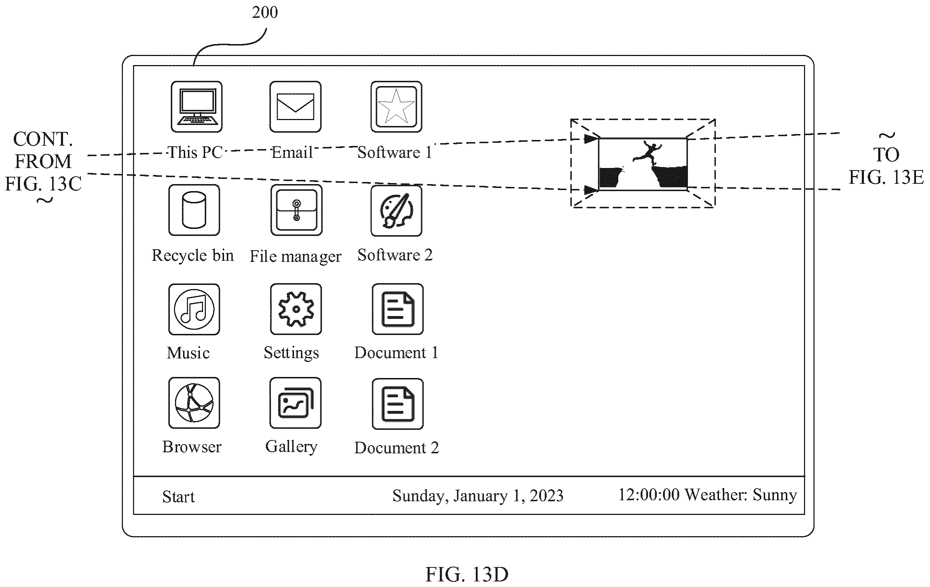

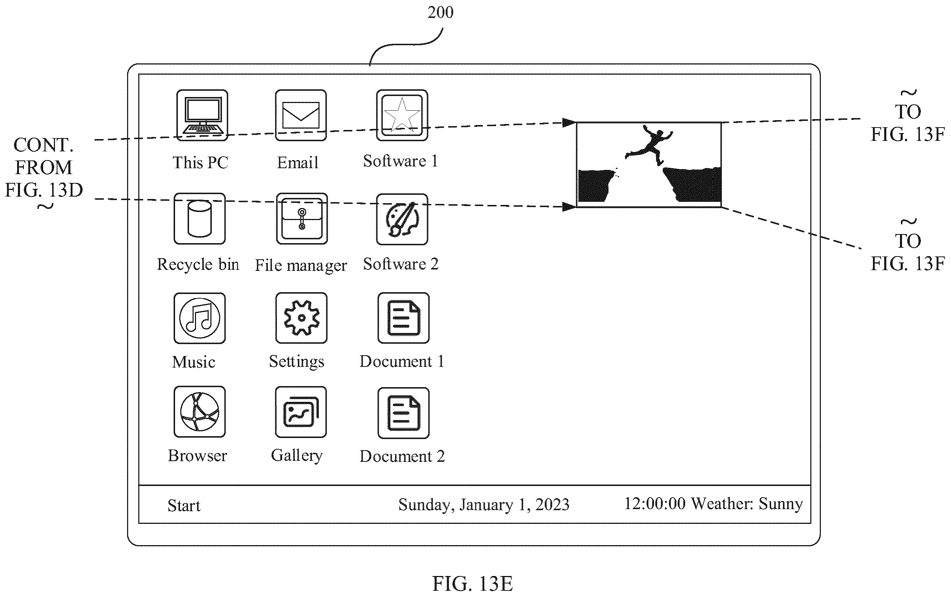

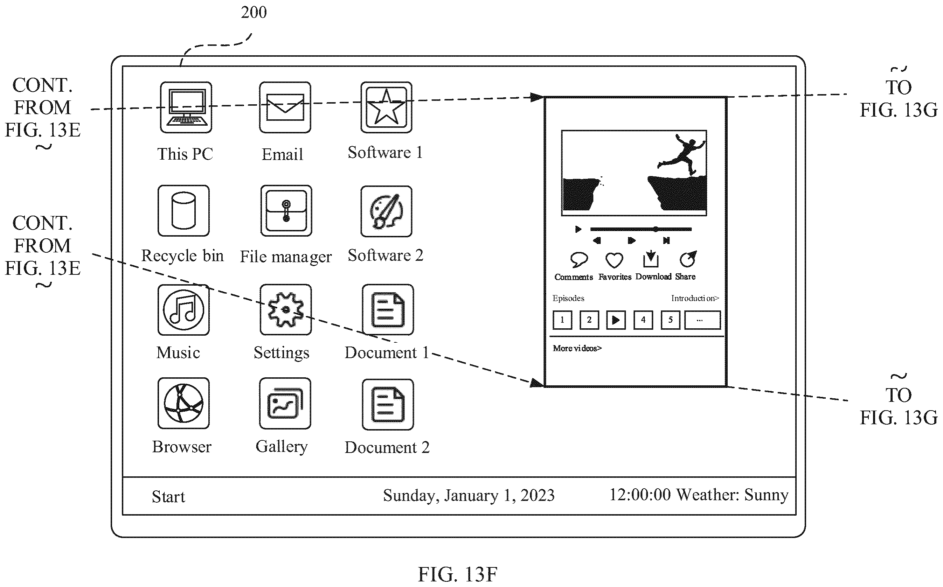

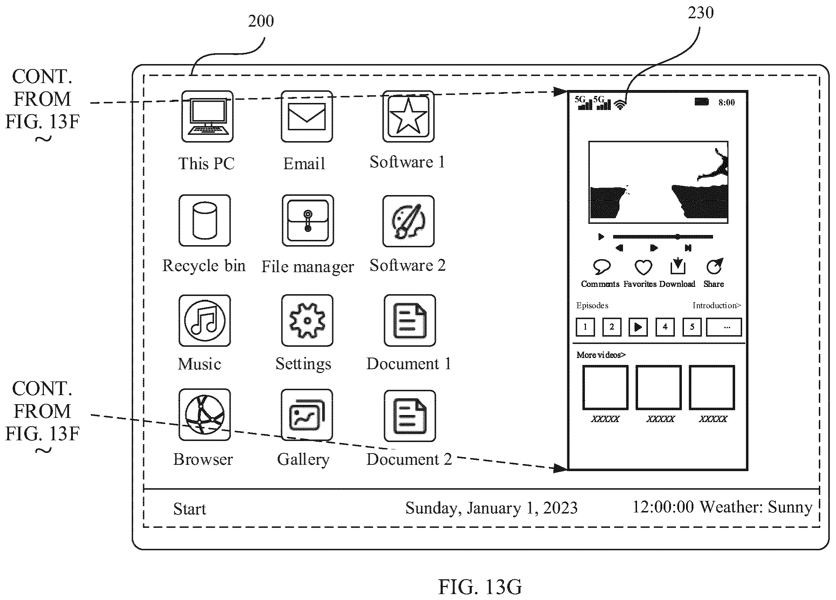

For example, FIG. 13A to FIG. 13G are a diagram 1 of the switching animation effect according to an embodiment of this application. As shown in FIG. 13A to FIG. 13G, the first point may be a central point of the first control in a window for playing the portrait video stream on the computer. In this case, the switching animation effect generated by the computer may be: in the display interface 200 of the computer, scaling down the first window 210 to the central point 220 of the first control, and then scaling up the first window 210 from the central point 220 of the first control to the second window 230. In this way, difficulty in generating the switching animation effect by the computer can be reduced, and smoothness of the switching animation effect can be visually improved, thereby improving user experience.

In another implementation, in the switching animation effect generated by the computer, the first window may alternatively be scaled down, based on the first control information, to the size and the location that are determined based on the first mapped control information, and then the first window is scaled up to the size and the location that are determined based on the second window information.

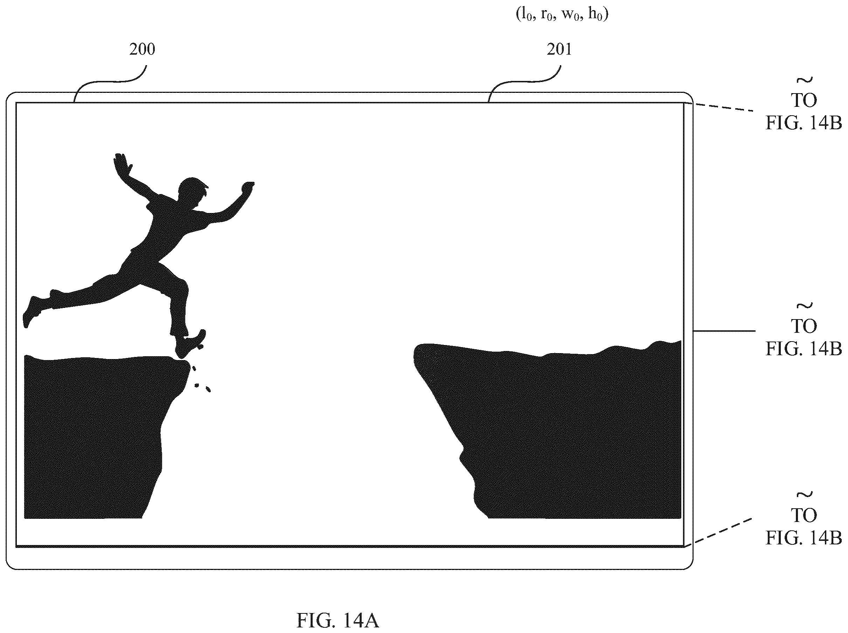

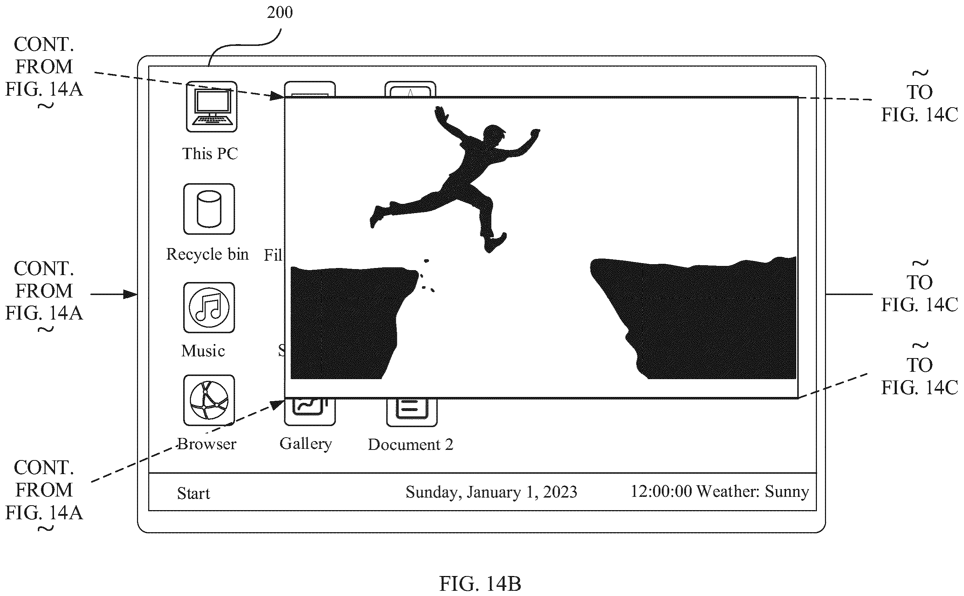

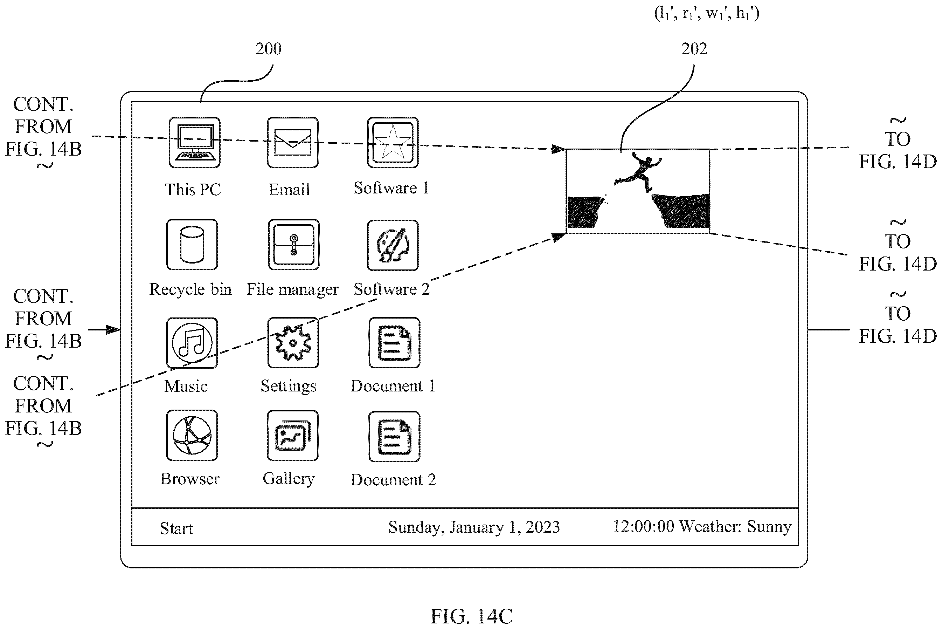

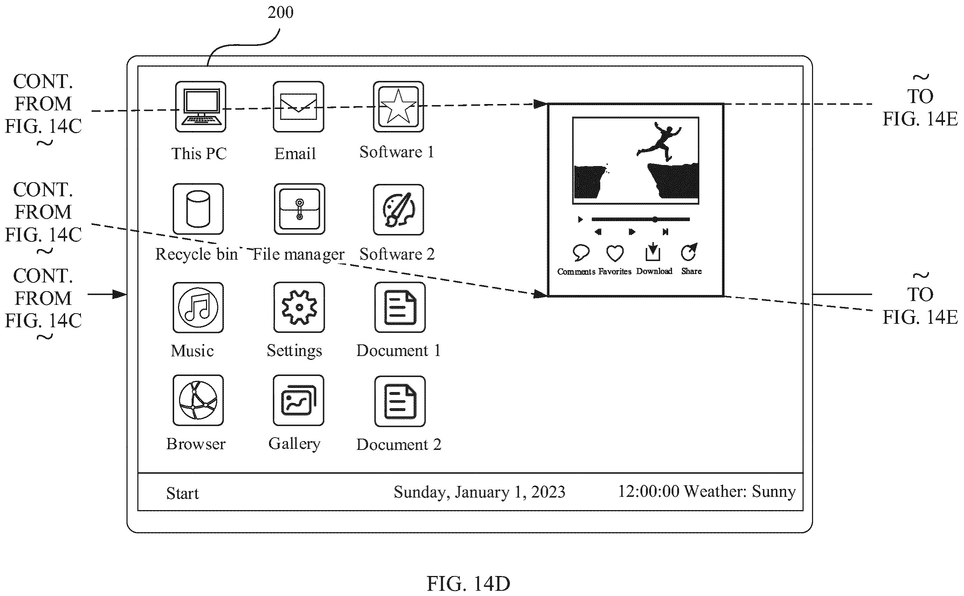

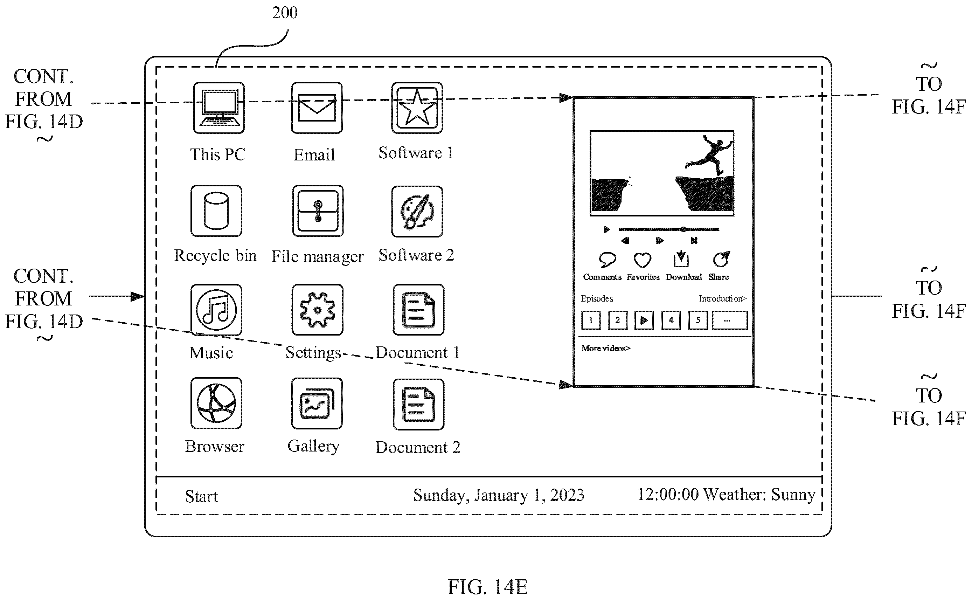

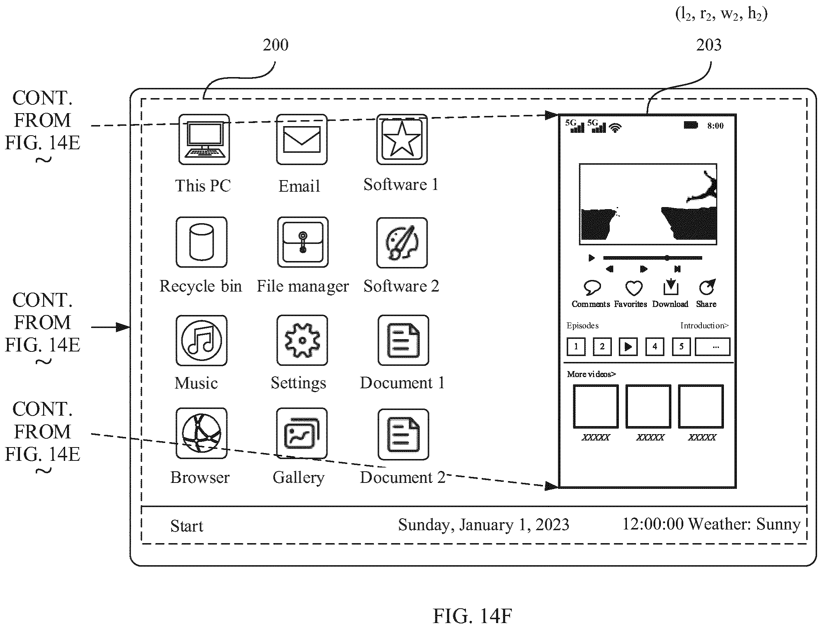

For example, FIG. 14A to FIG. 14F are a diagram 2 of the switching animation effect according to an embodiment of this application. As shown in FIG. 14A to FIG. 14F, the switching animation effect generated by the computer may alternatively be: in the display interface 200 of the computer, scaling down the first window (that is, a start window 201) determined based on the first window information ($l_a$, $r_0$, $w_0$, $h_0$) to a window (that is, an intermediate window 202) determined based on the first mapped control information ($l_1'$, $r_1'$, $w_1'$, $h_1'$), and then scaling up the first window from the intermediate window 202 to the second window (that is, an end window 203) determined based on the second window information ($l_2$, $r_2$, $w_2$, $h_2$).

In some embodiments, the switching animation effect generated by the computer may further include: scaling down the first window by using a first action, and then scaling up the first window to the second window by using a second action. The first action and the second action may be the same or may be different. The first action and the second action each may be one or more of the following animation effects: rotation, fade-in and fade-out, fly-in and fly-out, or the like. The first action and the second action are not specifically limited in this application. In this way, diversity of changes of the switching animation effect generated by the computer can be improved, and a display effect of the switching animation effect can be enhanced, thereby improving user experience.

In some embodiments, the switching animation effect generated by the computer may further include: scaling down the first window at a first speed, and then scaling up the first window to the second window at a second speed.

In an implementation, the implementation of the switching animation effect shown in FIG. 13A to FIG. 13G is used as an example, and the switching animation effect generated by the computer may include: scaling down the first window 210 to the central point 220 of the first control at the first speed, and then scaling up the first window 210 from the central point 220 of the first control to the second window 230 at the second speed.

In another implementation, the implementation of the switching animation effect shown in FIG. 14A to FIG. 14F is used as an example, and the switching animation effect generated by the computer may include: scaling down the start window 201 to the intermediate window 202 at the first speed, and then scaling up the intermediate window 202 to the end window 203 at the second speed.

The first speed and the second speed may be the same or may be different. To be specific, the switching animation effect may be: scaling down the start window 201 to the intermediate window 202 and then scaling up the intermediate window 202 to the end window 203 at a same speed. The switching animation effect may alternatively be: scaling down the start window 201 to the intermediate window 202 and then scaling up the intermediate window 202 to the end window 203 at different speeds.

In some embodiments, when a decoding capability of the computer is stable, the computer may determine the first speed and the second speed based on the first window information, the first control information, the second window information, and preset time. The preset time is playing time (that is, window moving time) of the switching animation effect determined based on the decoding capability of the computer and priori knowledge or an experiment. The switching animation effect is played for the preset time, so that no abnormal situation such as screen flickering or stuttering occurs during video stream switching.

Specifically, the computer may determine a first distance based on the first window information and the first control information, and determine a second distance based on the first control information and the second window information.

When the first speed and the second speed are the same, the computer may calculate the first speed, that is, the second speed, by dividing a sum of the first distance and the second distance by the preset time.

When the first speed and the second speed are different, the computer may divide the preset time into first preset time and second preset time according to an actual use requirement, and separately use the first preset time and the second preset time as moving time of the first distance and moving time of the second distance. Then, the first speed is calculated by dividing the first distance by the first preset time, and the second speed is calculated by dividing the second distance by the second preset time.

In some embodiments, the computer may further estimate a moving speed of the switching animation effect based on a process of buffering and decoding the landscape video stream by the computer and with reference to a buffering capability and a decoding capability of the computer, and determine the first speed and the second speed. The buffering capability of the computer represents a capability of the computer to buffer a video stream. For example, the buffering capability may be a size of the buffer of the computer and a buffering speed. The buffering speed may be determined based on a network bandwidth size of a communication connection between the mobile phone and the computer. The decoding capability of the computer represents a capability of the computer to decode a video stream. For example, the decoding capability includes but is not limited to decoding time and decoding speeds of video streams with different bitstreams. In the following embodiments, the solutions provided in embodiments of this application are described by using an amount of data decoded by the computer per unit time, for example, an amount of data processed per millisecond (Mb/ms) as the decoding capability.

Specifically, the computer may further determine the first speed and the second speed based on the first window information, the first control information, the second window information, and the buffering capability and the decoding capability of the computer.

In an implementation, that the first speed and the second speed that are determined by the computer are the same is used as an example. Specifically, a method for determining the first speed and the second speed by the computer may include S201 to S206.

S201: The computer determines the first distance $S_1$ based on the first window information and the first control information (which may be specifically the mapped first control information, that is, the first mapped control information), and determines the second distance $S_2$ based on the first mapped control information and the first window information.

When both the first mapped control information and the second window information are rectangle information, for example, the first mapped control information is ($l_2'$, $r_2'$, $w_2'$, $h_2'$) and the second window information is ($l_3'$, $r_3'$, $w_3'$, $h_3'$), the second distance $S_2$ may be calculated according to the following expression:

$$S_2 = \sqrt{(l_2' - l_3')^2 + (r_2' - r_3')^2}.$$

A method for calculating the first distance is the same as the method for calculating the second distance, and details are not described herein.

S202: The computer determines first time $t_1$, that is, the moving time of the first distance, based on the size B of the buffer and the buffering speed x. Specifically, an expression of the first time $t_1$ may be:

$$t_1 = \frac{B}{x}.$$

S203: The computer determines second time $t_2$, that is, the moving time of the second distance, based on a preset decoded data volume D and a decoding capability parameter y. The preset decoded data volume D is a preset amount of data that meets a condition of smooth playing of a data stream, for example, may be a data volume of one or more frames of images in a video stream.

Specifically, an expression of the second time $t_2$ may be:

$$t_2 = \frac{D}{y}.$$

S204: The computer determines a first estimated speed $v_1'$ based on the first distance $S_1$ and the first time $t_1$. Specifically, an expression of the first estimated speed $v_1'$ may be:

$$v_1' = \frac{S_1}{t_1}.$$

S205: The computer determines a second estimated speed $v_2$' based on the second distance $S_2$ and the second time $t_2$. Specifically, an expression of the second estimated speed $v_2$' may be:

$$v_2' = \frac{S_2}{t_2}.$$

S206: When the first estimated speed $v_1$' is less than or equal to the second estimated speed $v_2$', the computer may determine that both the first speed and the second speed are the first estimated speed $v_1$'. When the first estimated speed $v_1$' is greater than the second estimated speed $v_2$', the computer may determine that both the first speed and the second speed are the second estimated speed $v_2$'. In this way, sufficient time can be reserved for the computer to buffer and decode the portrait video stream after switching, to ensure that the portrait video stream after switching can be smoothly played after display of the switching animation effect of the computer is completed.

In this implementation, when the first speed and the second speed are the same, the switching animation effect is scaling down the start window 201 to the intermediate window 202 and then scaling up the intermediate window 202 to the end window 203 at a same speed. In this way, the moving speed of the switching animation effect is uniform and unchanged, and smoothness of the switching animation effect and user experience can be improved.

In an implementation, an example in which the first speed and the second speed that are determined by the computer are different is used. Specifically, a method for determining the first speed and the second speed by the computer may include S301 to S306.

S301: The computer determines the first distance $S_1$ based on the first window information and the first control information (which may be specifically the mapped first control information, that is, the first mapped control information), and determines the second distance $S_2$ based on the first mapped control information and the first window information. For a specific implementation method, refer to S201. Details are not described herein again.

S302: The computer determines first time $t_1$, that is, the moving time of the second distance, based on a preset decoded data volume D and a decoding capability parameter y. Specifically, an expression of the first time $t_1$ may be:

$$t_1 = \frac{D}{y}.$$

S303: The computer determines a first estimated speed $v_1$', that is, a moving speed of the second distance, based on the second distance $S_2$ and the first time $t_1$. Specifically, an expression of the first estimated speed $v_1$' may be:

$$v_1' = \frac{S_2}{t_1}.$$

S304: The computer determines second time $t_2$, that is, the moving time of the first distance, based on the first distance $S_1$ and the first estimated speed $v_1$'. Specifically, an expression of the second time $t_2$ may be:

$$t_2 = \frac{S_1}{v_1'}.$$

S305: The computer determines third time $t_3$, that is, buffering time, based on the size B of the buffer and the buffering speed x. Specifically, an expression of the third time $t_3$ may be:

$$t_3 = \frac{B}{x}.$$

S306: When the second time $t_2$ is greater than or equal to the third time $t_3$, the computer may determine that both the first speed and the second speed are the first estimated speed $v_1$'.

When the second time $t_2$ is less than the third time $t_3$, the computer may determine that the second speed is the first estimated speed $v_1$', and may determine the first speed, that is, a moving speed of the first distance, based on the first distance $S_1$ and the third time $t_3$. Specifically, an expression of the first speed $v_1$ may be:

$$v_1 = \frac{S_1}{t_3}.$$

In this way, it can be ensured that the computer has sufficient time to buffer the portrait video stream after switching, so that the portrait video stream after switching can be smoothly played after display of the switching animation effect of the computer is completed.

In some embodiments, when the switching animation effect generated by the computer is scaling down the first window to the first point at the first speed, and then scaling up the first window from the first point to the second window at the second speed, the computer may also determine the first speed and the second speed according to S201 to S206 and S301 to S306. Specifically, when determining the first distance and the second distance (for example, in S201 and S301), the computer may replace the first mapped control information with location information of the first point. In this way, the computer can accurately determine the first speed and the second speed.

In an implementation, the computer may implement S201 to S206 and S301 to S306 through an animation effect control module in the computer.

In some embodiments, to ensure that there is no phenomenon of motion blur or screen flickering in an image of the switching animation effect, the computer may further determine whether the first speed and the second speed are between a first speed threshold and a second speed threshold, to be specific, whether the first speed and the second speed are greater than the first speed threshold and less than the second speed threshold. The first speed threshold is a minimum speed at which there is no motion blur in a video stream playback image, and the second speed threshold is a maximum speed at which there is no screen flickering in a video stream playback image.

Specifically, the first speed threshold and the second speed threshold may be determined based on agreed baseline data (for example, priori knowledge), or the first speed threshold and the second speed threshold may be determined based on user experience data. The first speed threshold and the second speed threshold may be constant values, or the first speed threshold and the second speed threshold may be dynamically adjusted based on user experience. This is not specifically limited in this application.

When the first speed and the second speed are not between the first speed threshold and the second speed threshold, the computer may adjust the first speed and the second speed, to enable the first speed and the second speed to be between the first speed threshold and the second speed threshold, so that the computer determines that there is no phenomenon of motion blur or screen flickering in the image of the switching animation effect.

In an implementation, the computer may adjust the first speed and the second speed through a decoding capability adaptation module in the computer. Specifically, it can be learned from the foregoing processes of determining the first speed and the second speed in S201 to S206 and S301 to S306 that the first speed and the second speed are related to the decoding capability parameter of the computer. Therefore, the decoding capability adaptation module may adjust the decoding capability parameter to adjust the first speed and the second speed between the first speed threshold and the second speed threshold.

In some embodiments, the computer may use the first speed and the second speed as baselines to generate the switching animation effect at a constant speed. For example, the switching animation effect may uniformly transform from the start window 201 to the intermediate window 202 at the first speed, and then uniformly transform from the intermediate window 202 to the end window 203 at the second speed.

In some embodiments, the computer may further use the first speed and the second speed as baselines to generate the switching animation effect at a variable speed. To be specific, the switching animation effect transforms from the start window 201 to the intermediate window 202 at a variable speed that uses the first speed as a baseline and that changes from fast to slow or from slow to fast, and then transforms from the intermediate window 202 to the end window 203 at a variable speed that uses the second speed as a baseline and that changes from fast to slow or from slow to fast. For example, the computer may use the first speed and the second speed as baselines to determine a specific speed of the variable speed based on a Bezier curve (Bezier curve) principle.

In some embodiments, display content of the switching animation effect may be related to display content (that is, the landscape video stream and the portrait video stream) of the first application. Specifically, the display content of the switching animation effect may be one or more of a video of the landscape video stream, a last-frame image of the landscape video stream, a video of the portrait video stream, a first-frame image of the portrait video stream, an image of a specific frame in the landscape video stream, and a mask image of an image of a specific frame in the landscape video stream. The display content of the switching animation effect may further include but is not limited to: a preset mask image, a preset image (for example, a preset logo logo), a preset video, and the like. The mask image is an image obtained after blurring processing is performed on an image.

In an implementation, in S104 or S105, after receiving the switching instruction, the computer may obtain a last-frame image, a mask image, a preset image, a preset video, or the like of the landscape video stream, to generate the display content of the switching animation effect, for example, display content of the start window 201.

In an implementation, in S104, after receiving the switching instruction, the mobile phone may further obtain a first-frame image, a mask image, a preset image, a preset video, or the like of the portrait video stream, to generate the display content of the switching animation effect, for example, display content of the end window 203.

In some application scenarios, before the computer completes decoding of the received portrait video stream, if the mobile phone does not stop sending the landscape video stream to the computer, in a process of displaying the switching animation effect by the computer, the landscape video stream may further continue to be played in display content of the first window (for example, a window in a process from the start window 301 to the intermediate window 302 and/or a window in a process from the intermediate window 302 to the end window 303), until a last frame of the landscape video stream is reached.

In an implementation, before the switching animation effect moves to the end window, if the landscape video stream is completely played, the last-frame image of the landscape video stream may be used as display content of a moving window of the switching animation effect until the switching animation effect moves to the end window, that is, the switching animation effect is completely played.

In an implementation, when the switching animation effect is played to the end window, if the landscape video stream is not completely played, the landscape video stream may continue to be played in the end window. In addition, the computer buffers and decodes the received portrait video stream. After decoding of the portrait video stream is completed, the computer resumes (or replaces) the landscape video stream played in the end window, and plays the portrait video stream in the end window, to enable resuming between content of the portrait video stream and content of the landscape video stream and implement smooth video stream switching.

As shown in FIG. 9, after the computer generates and displays the switching animation effect, the method further includes the following step.

S106: The computer displays the portrait video stream in the second window after display of the switching animation effect is completed.

In this embodiment of this application, the computer may display the portrait video stream in the second window after display of the switching animation effect is completed. The second window may be a window in which display of the switching animation effect is completed, for example, the end window 203. In other words, the second window may be obtained by changing the location and/or the size of the first window. Alternatively, the second window may be a display window regenerated by the computer based on the second window information after display of the switching animation effect is completed. This is not specifically limited in this application.

In some embodiments, in the process in which the computer generates the switching animation effect in S105, when the computer determines the first speed and the second speed based on the decoding capability, as shown in FIG. 9, before S105, the video switching method provided in this embodiment of this application further includes the following step.

S107: The computer obtains the decoding capability parameter of the computer.

In this embodiment of this application, the computer may further obtain the decoding capability parameter of the computer, where the decoding capability parameter represents the capability of the computer to decode a video stream. The decoding capability parameter includes but is not limited to: decoding time and decoding speeds (that is, amounts of data decoded by the computer per unit time) of video streams with different bitstreams.

In an implementation, S107 may be implemented by the decoding capability adaptation module in the computer.

In an example, the decoding capability adaptation module can obtain the decoding capability parameter of the computer from a local storage or a cloud server. Specifically, a preset decoding capability mapping table is stored in the local storage of the computer or the cloud server. The decoding capability mapping table is a decoding capability mapping table established for video streams with different bitstreams based on different network parameters and capabilities of electronic devices (for example, the computer). The network parameters include, for example, a bandwidth, a rate, and a delay, and the capabilities of the electronic devices include, for example, a processing capability of a device chip.

In another example, the decoding capability adaptation module can further estimate the decoding capability parameter of the computer. Specifically, the computer may obtain a time point ($T_{startTimeBuf}$), recorded in a decoder, at which the portrait video stream enters the buffer, a time point ($T_{endTimeBuf}$), recorded in the decoder, at which decoding of the portrait video stream is completed, and an amount ($D_{sum}$) of data accumulated in the buffer. Then, the computer may estimate the decoding capability parameter y of the computer according to the following expression:

$$y = \frac{D_{sum}}{(T_{endTimeBuf} - T_{startTimeBuf})}.$$

It should be noted that S107 is an optional step. If the computer needs to determine the first speed and the second speed of the switching animation effect with reference to the decoding capability parameter in S105, S107 is performed. S107 may be performed when the collaborative operation is triggered (that is, when the mobile phone establishes the collaborative operation connection to the computer in S101), or S107 may be performed after S101 and before S105 to ensure that the first speed and the second speed can be determined based on the decoding capability parameter in S105. This is not specifically limited in this application.

In some embodiments, as shown in FIG. 9, after S105, the video switching method provided in this embodiment of this application further includes the following step.

S108: After the computer displays the switching animation effect, obtain an actual decoding capability parameter for decoding the portrait video stream, and update the original decoding capability parameter.

In some embodiments, after the computer completes display of the switching animation effect determined in S105, the actual decoding capability parameter for decoding the portrait video stream on the computer may be obtained. In addition, the computer may update the decoding capability parameter of the computer in the decoding capability mapping table by using the actual decoding parameter. In this way, the decoding capability parameter in the decoding capability mapping table can be close to a real decoding capability of the computer.

In an implementation, S108 may be implemented by a decoding detection module in the computer. Specifically, the decoding detection module can monitor the decoding capability parameter of the computer in real time. In a process of displaying the switching animation effect by the computer, the decoding detection module may obtain, in real time, the decoding capability parameter for decoding the portrait video stream on the computer. After the computer completes display of the switching animation effect, the decoding detection module may determine the actual decoding capability parameter, to update the original decoding capability parameter in the decoding capability mapping table.

As described in the video switching method described in S101 to S108 in the foregoing embodiment, according to the method provided in this embodiment of this application, the mobile phone can obtain information (for example, location information) about a control that is in the window for playing the portrait video stream on the mobile phone and that is used to play a video, that is, the first control information, and may transfer the first control information to the computer. In this way, when the window for playing a video stream on the mobile phone is switched from the landscape state to the portrait state, that is, is switched from playing the landscape video stream to playing the portrait video stream, the computer may determine, based on the first window information, the first control information, and the second window information, the transformation location of the first window in the process in which the computer switches from playing the landscape video stream to playing the portrait video stream, to generate and display the switching animation effect, so that the computer can smoothly switch between the two video streams.

The following continues to use the mobile phone and the computer in the foregoing embodiment as an example. In some application scenarios, before the computer generates, according to the method described in S101 to S108, the switching animation effect to smoothly switch from playing the video stream in the landscape state to playing the video stream in the portrait state, the computer may further generate a switching animation effect when the mobile phone switches from playing the portrait video stream to playing the landscape video stream, to smoothly switch from playing the video stream in the portrait state to playing the video stream in the landscape state.

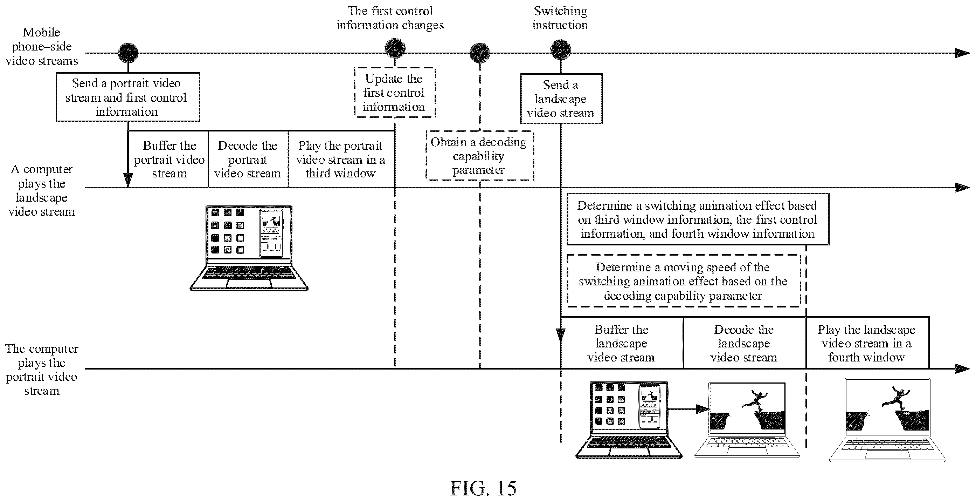

FIG. 15 is a diagram 4 of a principle of a video switching method according to an embodiment of this application. As shown in FIG. 15, first, when playing a portrait video stream, a mobile phone sends the portrait video stream and first control information to a computer, where the first control information is associated with a location of a control that is in a window for playing the portrait video stream by the mobile phone and that is for playing a video. The computer plays the portrait video stream in a third window, and sends updated first control information to the computer when the first control information changes. After the mobile phone switches from playing the portrait video stream to playing a landscape video stream, the mobile phone sends the landscape video stream to the computer. The computer can generate and display the switching animation effect based on third window information, second control information, and fourth window information, so that the computer can smoothly switch from the portrait video stream to the landscape video stream.

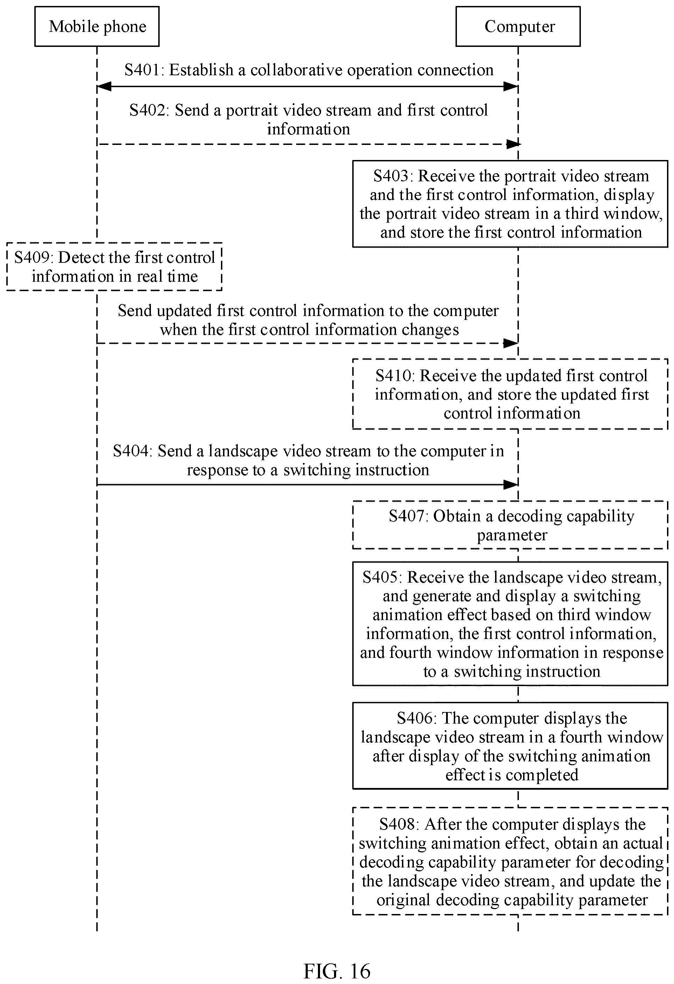

Specifically, FIG. 16 is a schematic flowchart 2 of a video switching method according to an embodiment of this application. As shown in FIG. 16, the video switching method provided in this embodiment of this application mainly includes S401 to S410.

S401: A mobile phone establishes a collaborative operation connection to a computer.

Specifically, for an implementation in which the mobile phone establishes the collaborative operation connection to the computer, refer to S101. Details are not described herein.

S402: The mobile phone sends a portrait video stream and first control information to the computer.

In some embodiments, in a display interface for playing the portrait video stream on the mobile phone, there are a plurality of playback controls for playing a video, that is, a window that is of a first application and that is displayed on the mobile phone includes a plurality of first controls. As shown in FIG. 10, the window that is of the first application and that is displayed on the mobile phone further includes the plurality of first controls such as a playback control 103, a playback control 104, and a playback control 105. In this case, the mobile phone may further obtain control information of the playback control 103, the playback control 104, and the playback control 105, to obtain a plurality of pieces of first control information.

In some embodiments, when at least one first control is included, the mobile phone may further obtain and send first identification information corresponding to each piece of first control information. Specifically, the first identification information is identification information corresponding to the first control information, that is, identification information corresponding to the first control, and each piece of first identification information corresponds to one first control. The first identification information is a unique identifier of the first control. For example, the first identification information may be an identity number (identity document, ID) of the first control, and the first identification information may be used to distinguish the first control, to quickly determine the first control information corresponding to the first control.

In an implementation, the mobile phone may send the first control information and the corresponding first identification information to the computer on a control channel. In another implementation, the mobile phone may alternatively send the first control information and the corresponding first identification information to the computer on an independent logical channel.

In some embodiments, the mobile phone may further send second indication information to the computer. The second indication information may indicate a location and/or a size of a screen projection window for playing the portrait video stream on the computer. In this way, the computer can quickly generate the screen projection window to play the portrait video stream.

In an implementation, the second indication information may indicate a location and/or a size of a window for displaying the portrait video stream on the mobile phone. The location and/or the size of the window for displaying the portrait video stream on the mobile phone may be used by the computer to determine the location and/or the size of the screen projection window, and generate the screen projection window to play the portrait video stream.

S403: The computer receives the portrait video stream and the first control information, displays the portrait video stream in a third window, and stores the first control information.

In this embodiment of this application, after buffering and decoding the received portrait video stream, the computer obtains the decoded portrait video stream, and displays the portrait video stream in the screen projection window (that is, the third window). A location and a size of the third window may be determined based on the third window information. The third window information may be associated with the size of the window for displaying the portrait video stream on the mobile phone.

In an implementation, when the mobile phone sends the second indication information to the computer in S402, and the second indication information is the location and/or the size of the window for displaying the portrait video stream on the mobile phone, the computer may determine the third window information based on the second indication information. Further, the computer may generate the third window based on the third window information, to play the portrait video stream in the third window.

In addition, the computer may further perform location mapping on the received first control information, to obtain and store a screen projection location (that is, first mapped control information) of the first control in the computer, and store the first mapped control information.

In some embodiments, when the mobile phone sends a plurality of pieces of first control information and corresponding first identification information, the computer may further perform mapping transformation on each piece of first control information in the plurality of pieces of first control information to obtain pieces of first mapped control information respectively corresponding to the plurality of pieces of first control information, and store each piece of first mapped control information and first identification information corresponding to the first mapped control information.

S404: The mobile phone sends a landscape video stream to the computer in response to a switching instruction.

Specifically, the switching instruction may indicate that the mobile phone switches from a portrait state to a landscape state, that is, switches from playing the portrait video stream to playing the landscape video stream. The switching instruction may be generated by a user by initiating a switching operation on the mobile phone. The switching instruction may alternatively be generated by a user by initiating a switching operation on the computer, and the computer sends the switching instruction to the mobile phone.

In this embodiment of this application, in response to the switching instruction, the mobile phone may switch from playing the portrait video stream to playing the landscape video stream, that is, a video stream sent by the mobile phone to the computer is switched from the portrait video stream to the landscape video stream.

In some embodiments, when the mobile phone sends the first identification information to the computer in S402, the mobile phone may further send target identification information to the computer. The target identification information is identification information of a target control, and the target identification information is one of the pieces of first identification information, in other words, the target control is one of the first controls. Specifically, the target control is a first control that is determined by the user and that is used to switch to landscape playing, in other words, the target control is a first control that is used by the user to choose, on the display interface of the mobile phone, to switch to playing the landscape video stream.

In some embodiments, similar to the manner in which the mobile phone sends the first control information, the mobile phone may send the identification information of the target control to the computer on the control channel. An independent logical channel may be further opened between the mobile phone and the computer, and is used to send the identification information of the target control to the computer. This is not specifically limited in this application.

S405: The mobile phone receives the landscape video stream, and generates and displays a switching animation effect based on third window information, the first control information, and fourth window information in response to a switching instruction.

In this embodiment of this application, the computer may buffer and decode the received landscape video stream to obtain the decoded landscape video stream, and may display the portrait video stream in a fourth window. A location and a size of the fourth window may be determined based on the fourth window information. The fourth window information may include a size of the entire display interface (full screen) of the computer, and the fourth window information may be further associated with a location and/or a size of the window (that is, a window for playing the landscape video stream) that is of the first application and that is displayed on the mobile phone in the landscape state.

In an implementation, the fourth window information may be preset in the computer. For example, the fourth window information preset in the computer may be the size of the entire display interface of the computer. In this way, the mobile phone may further send a full-screen playback instruction to the computer in S404, and the computer may generate the fourth window based on the preset fourth window information in response to the full-screen playback instruction, and play the landscape video stream in a full-screen manner.

In another implementation, the computer may further receive the location and/or the size, sent by the mobile phone, of the window for playing the landscape video stream on the mobile phone, and determine the fourth window information based on the location and/or the size of the window for playing the landscape video stream on the mobile phone. For example, the computer may perform mapping transformation (for example, location offsetting or proportional scaling) on the received location and/or size of the window for playing the landscape video stream on the mobile phone, to determine the fourth window information. Further, the computer may generate the fourth window based on the fourth window information, to play the landscape video stream in the fourth window.

The computer may generate and display the switching animation effect based on the third window information, the first control information, and the fourth window information in response to the switching instruction. The switching animation effect includes the computer switching from displaying the window of the first application in the portrait state to displaying the window of the first application in the landscape state, in other words, the computer changing from the third window for playing the portrait video stream to the fourth window for playing the landscape video stream.

In some embodiments, the computer may scale down or scale up the first window based on the third window information, the first control information, and the fourth window information, so that content displayed in the third window changes with a size of the third window, thereby forming the switching animation effect. Specifically, the switching animation effect generated by the computer may include: scaling down the third window based on the third window information and the first control information, where a size and a location of the scaled-down third window are associated with the first control information; and then scaling up the third window based on the fourth window information, where a size and a location of the scaled-up third window are associated with the fourth window information.

In an implementation, in the switching animation effect generated by the computer, the third window may be scaled down to a second point based on the first control information, and then the third window is scaled up from the second point. The second point is determined based on the first control information, and the second point may be a point determined based on the location and the size of the first control in the first control information and according to a preset rule.

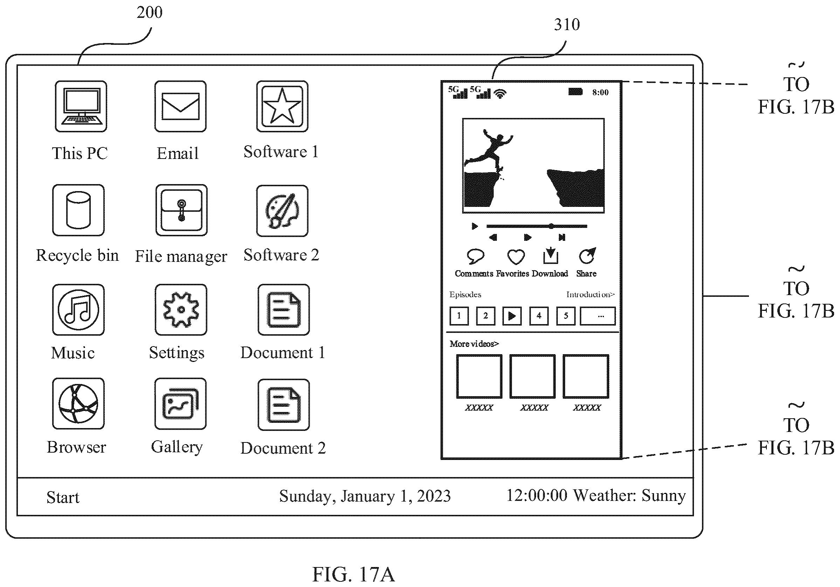

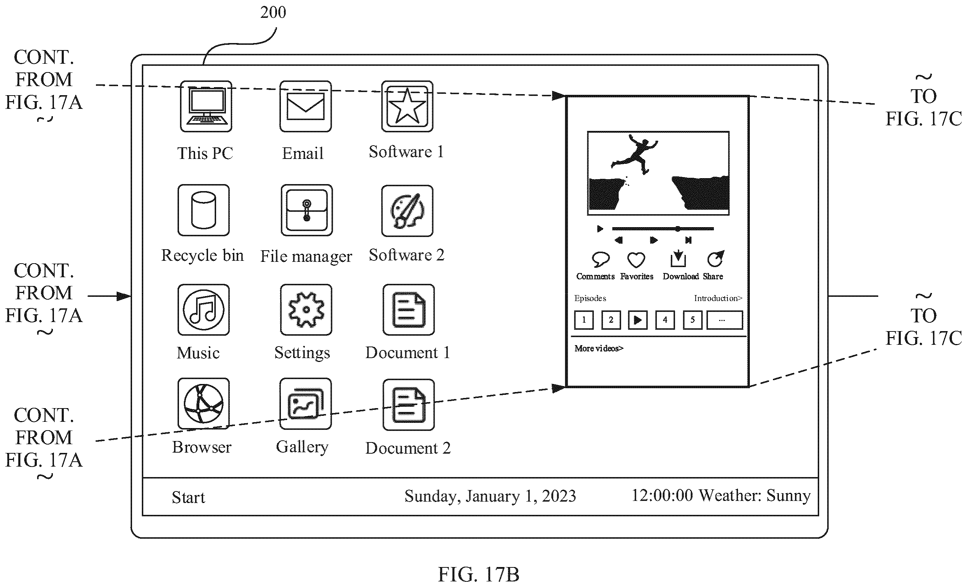

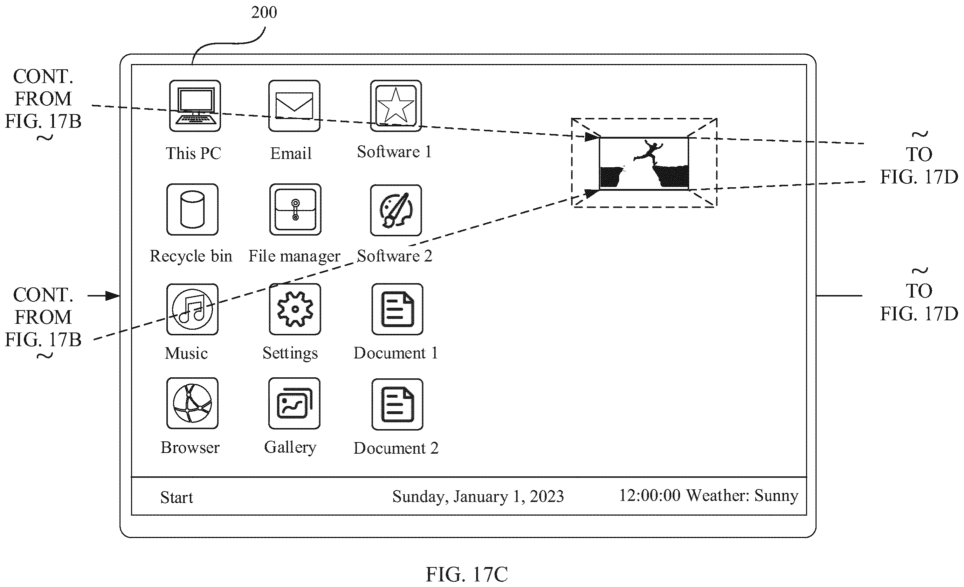

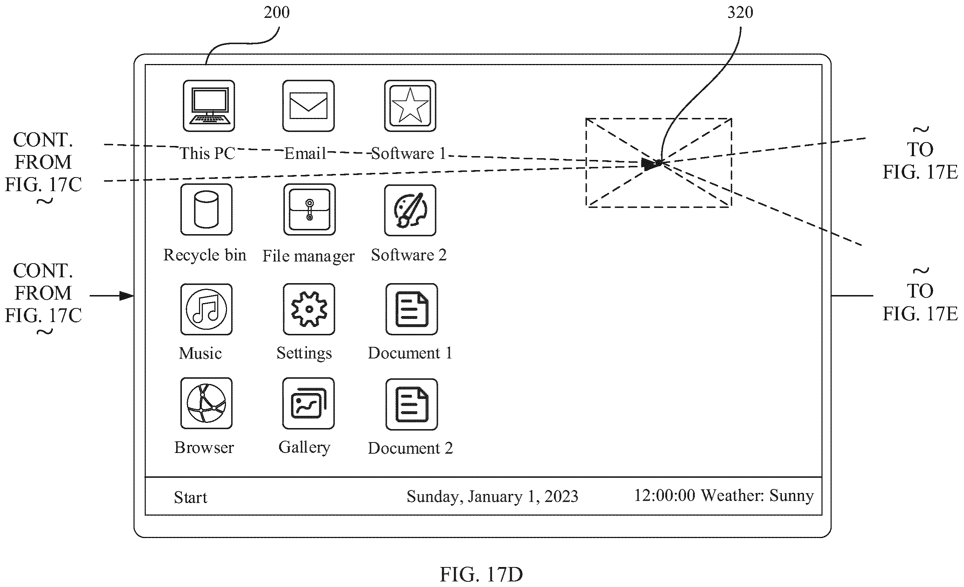

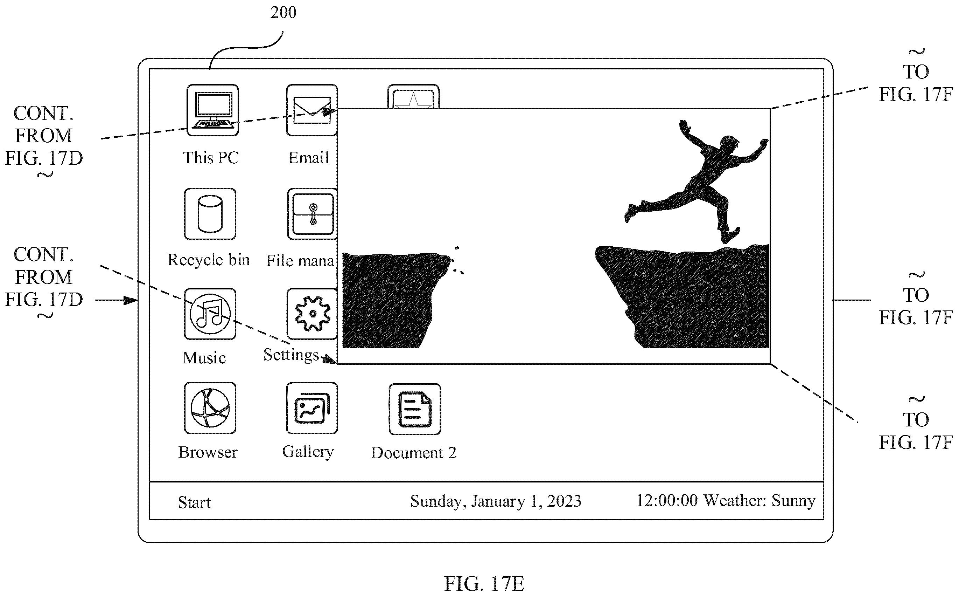

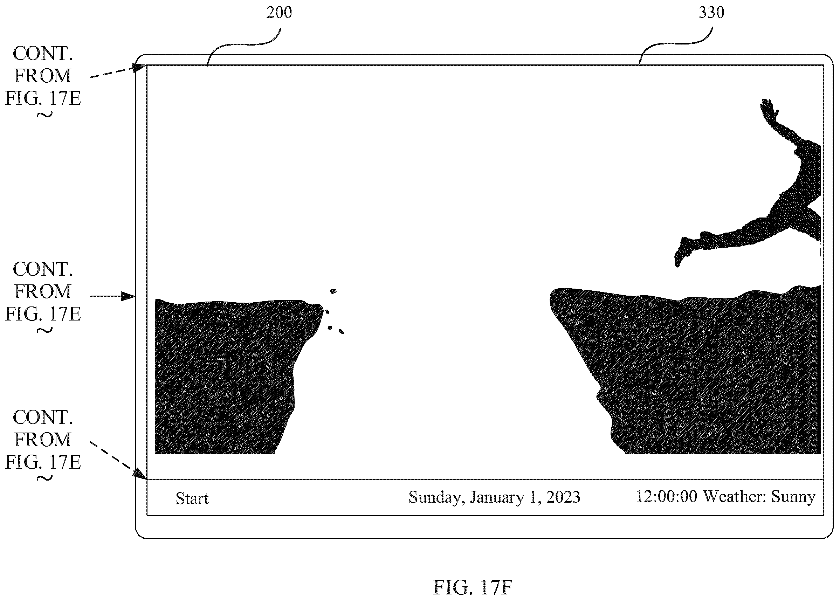

For example, FIG. 17A to FIG. 17F are a diagram 3 of the switching animation effect according to an embodiment of this application. As shown in FIG. 17A to FIG. 17F, an example in which the second point is a central point of the first control in a window for playing the portrait video stream on the computer, and the fourth window is a full-screen window of the computer is used. In this case, the switching animation effect generated by the computer may include: in the display interface 200 of the computer, scaling down the third window 310 to the central point 320 of the first control at a third speed by using a third action, and then scaling up the third window 310 from the central point 320 of the first control to the fourth window 330 at a fourth speed by using a fourth action.

In another implementation, in the switching animation effect generated by the computer, the third window may alternatively be scaled down, based on the first control information at a third speed by using a third action, to the size and the location that are determined based on the first mapped control information, and then the third window is scaled up, at a fourth speed by using a fourth action, to the size and the location that are determined based on the fourth window information.

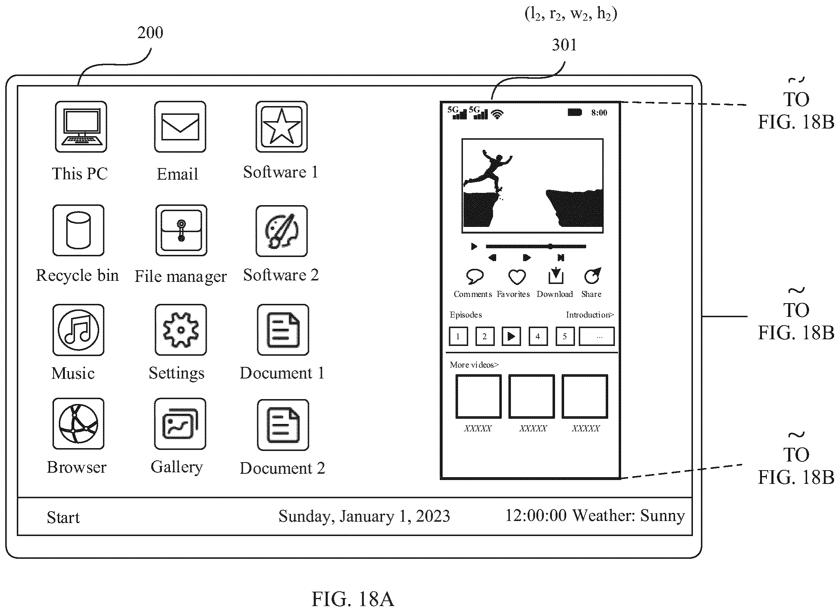

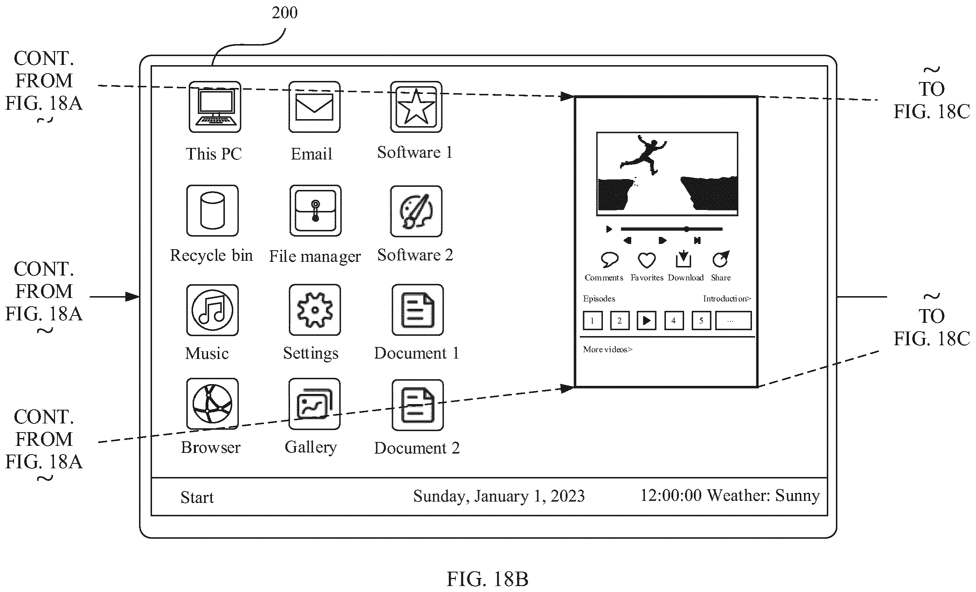

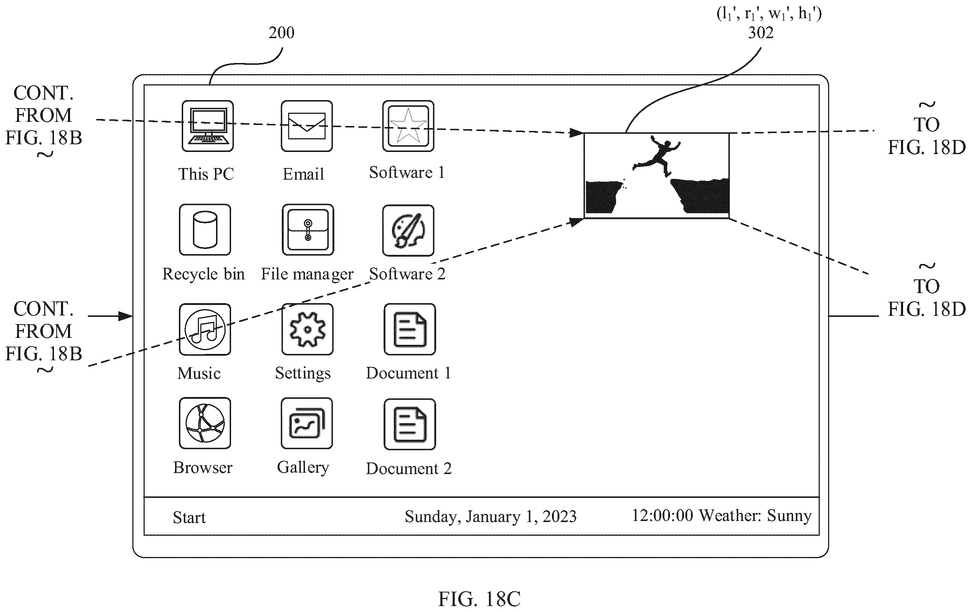

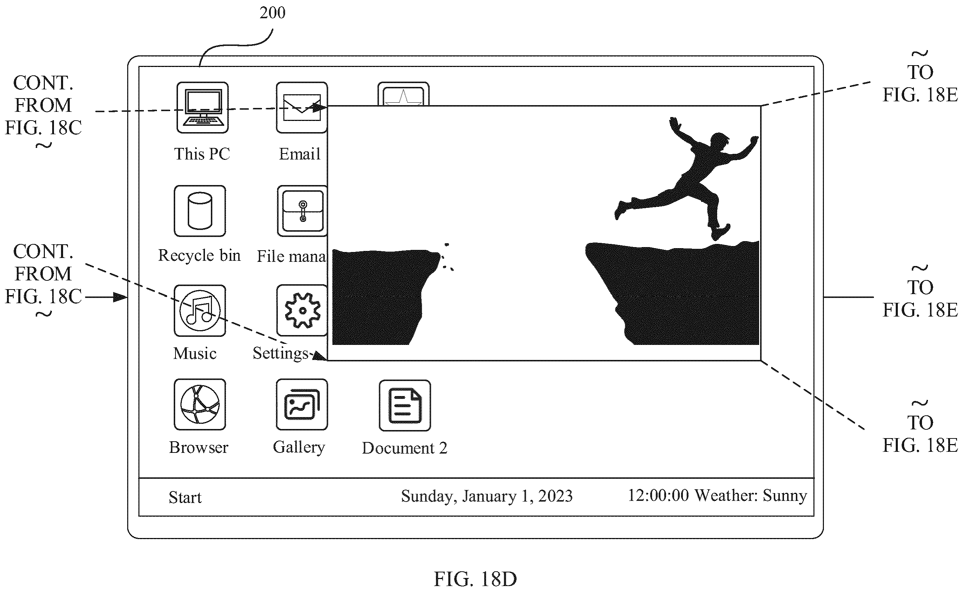

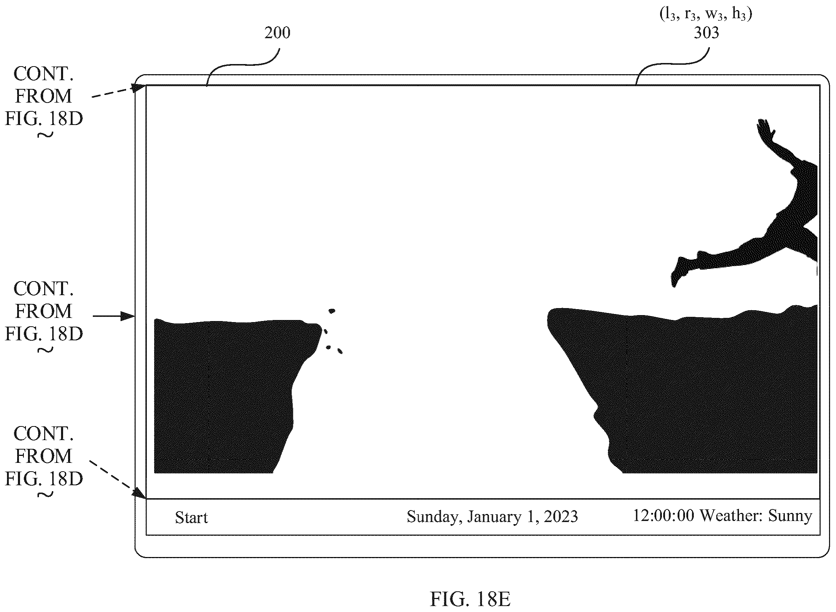

For example, FIG. 18A to FIG. 18E are a diagram 4 of the switching animation effect according to an embodiment of this application. As shown in FIG. 18A to FIG. 18E, an example in which the fourth window is the full-screen window of the computer is used. The switching animation effect generated by the computer may be: in the display interface of the computer, scaling down, at the third speed by using the third action, the third window (that is, a start window 301) determined based on the third window information $(l_2, r_2, w_2, h_2)$ to a window (that is, an intermediate window 302) determined based on the first mapped control information $(l_1', r_1', w_1', h_1')$, and then scaling up the third window from the intermediate window 302 to the fourth window (that is, an end window 303) determined based on the fourth window information $(l_3, r_3, w_3, h_3)$.

The third action and the fourth action may be the same or may be different. The third action and the fourth action each may be one or more of the following animation effects: rotation, fade-in and fade-out, fly-in and fly-out, or the like. The third action and the fourth action are not specifically limited in this application.

In some embodiments, when a decoding capability of the computer is stable, the computer may determine the third speed and the fourth speed based on the third window information, the first control information, the fourth window information, and preset time.

In some embodiments, the computer may further estimate a moving speed of the switching animation effect based on a process of buffering and decoding the landscape video stream by the computer and with reference to a buffering capability and a decoding capability of the computer, and determine the third speed and the fourth speed.

Specifically, the computer may determine the third speed and the fourth speed based on the third window information, the first control information, the fourth window information, and the buffering capability and the decoding capability of the computer. For a method for determining the third speed, the fourth speed, and display content of the switching animation effect, refer to the method for determining the first speed, the second speed, and the display content of the switching animation effect in S105. Details are not described herein.

S406: The computer displays the landscape video stream in the fourth window after display of the switching animation effect is completed.

The fourth window may be a window in which display of the switching animation effect is completed, for example, the end window 303. In other words, the second window may be obtained by changing the location and/or the size of the third window. Alternatively, the fourth window may be a display window regenerated by the computer based on the fourth window information after display of the switching animation effect is completed. This is not specifically limited in this application.

In some embodiments, in the process in which the computer generates the switching animation effect in S405, when the computer determines the third speed and the fourth speed based on the decoding capability, as shown in FIG. 16, before S405, the video switching method provided in this embodiment of this application further includes the following step.

S407: The computer obtains a decoding capability parameter of the computer.

S408: After the computer displays the switching animation effect, obtain an actual decoding capability parameter for decoding the landscape video stream, and update the original decoding capability parameter.

Specifically, for implementations of S407 and S408, refer to S107 and S108. Details are not described herein.

In some embodiments, to enable the computer to accurately determine a transformation location of the switching animation effect, and improve smoothness of generating the switching animation effect by the computer, the mobile phone may further monitor the first control information in real time, and when the first control information changes, obtain and send updated first control information to the computer, so that the first control information can be updated in a timely manner. As shown in FIG. 16, before S405, the video switching method provided in this embodiment of this application further includes the following step.

S409: The mobile phone detects the first control information in real time, and when the first control information changes, obtains and sends the updated first control information to the computer.

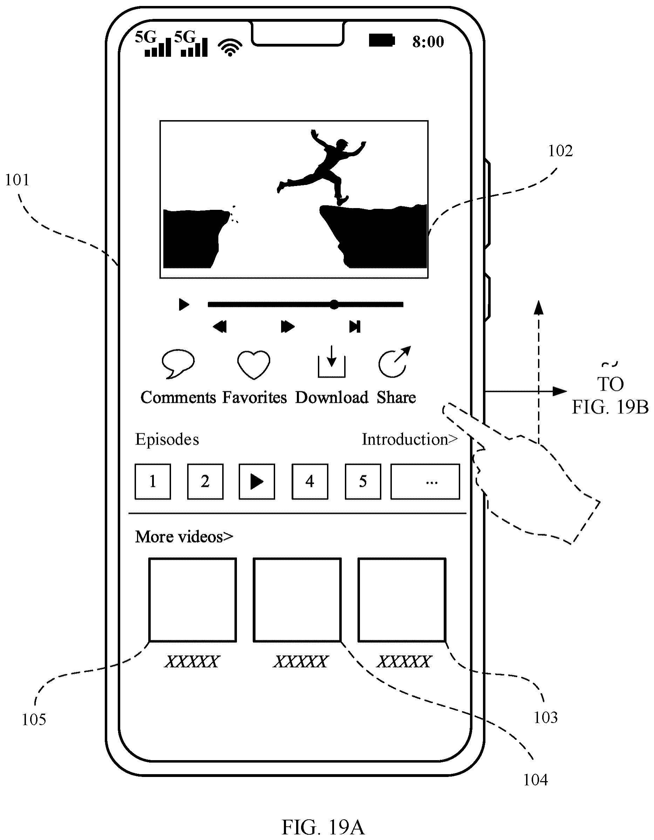

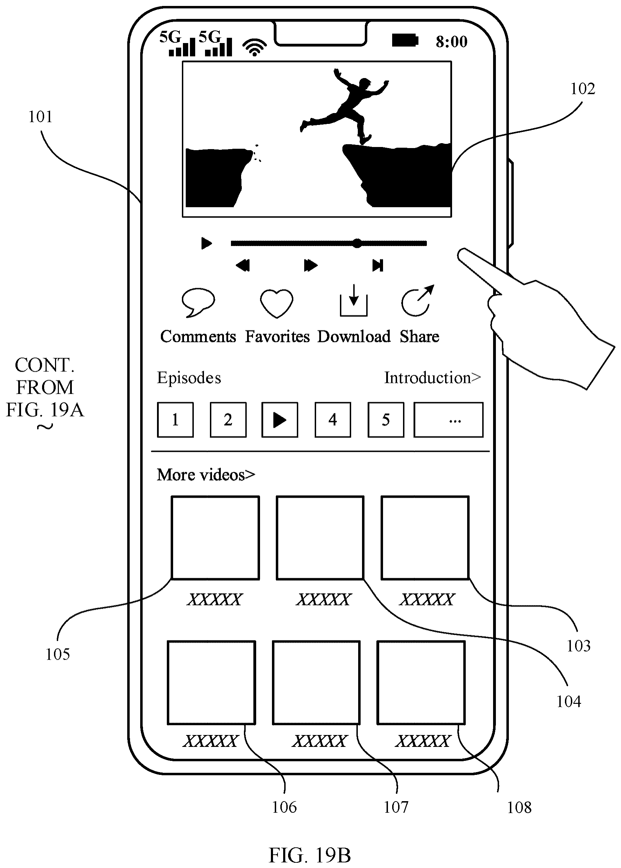

In some application scenarios, when the first control information changes: For example, FIG. 19A and FIG. 19B are a diagram of the display interface of the mobile phone according to an embodiment of this application. As shown in FIG. 19A and FIG. 19B, the user may move the display interface of the mobile phone up and down by swiping up and down on a display of the mobile phone, thereby changing locations of playback controls (such as a playback control 102, a playback control 103, a playback control 104, and a playback control 105) in the window of the first application, and causing a change in the first control information. The mobile phone detects the first control information in real time, and sends the updated first control information to the computer. In this way, it can be ensured that the computer can quickly and accurately obtain the first control information when determining the animation effect.

In an implementation, S409 may be implemented by a control sensing module in the mobile phone. Specifically, the control sensing module may detect, in real time, whether information and a size of the first control in the window that is of the first application and that is displayed by the mobile phone change; and if the first control information changes, obtain current latest first control information, to update the first control information, and send the updated first control information to the computer. In this way, the computer can accurately determine the switching animation effect based on the first control information.

In some embodiments, when the mobile phone sends the first identification information to the computer in S402, the mobile phone may further send the updated first control information and corresponding first identification information to the computer. This helps the computer quickly update the first control information based on the first identification information.

In this embodiment of this application, that the first control information changes includes but is not limited to: size information of the first control changes, location information of the first control changes, the first control information is deleted (that is, the original first control is moved out of the window that is of the first application and that is displayed on the mobile phone), and first control information is newly added (that is, a new first control is moved into the window that is of the first application and that is displayed on the mobile phone). As shown in FIG. 19A and FIG. 19B, the playback control 106, the playback control 107, and the playback control 108 are playback controls newly added after content of the window that is of the first application and that is displayed on the mobile phone changes. Control information corresponding to the playback control 106, the playback control 107, and the playback control 108 is newly added first control information.

S410: The computer receives the updated first control information, and stores the updated first control information.

In this embodiment of this application, after receiving the updated first control information, the computer may perform mapping transformation on the received updated first control information to obtain updated first mapped control information, and replace the original first mapped control information with the updated first mapped control information, to update the first mapped control information.

For example, when the mobile phone sends the updated first control information and the corresponding first identification information to the computer, the computer may determine, based on the first identification information, the first control information stored in S403, and replace the original first control information with the updated first control information corresponding to the first identification information. If the computer does not find the stored original first control information based on the first identification information, it indicates that the updated first control information corresponding to the first identification information is newly added first control information, and the first control information is directly stored.

In an implementation, if the computer does not receive the first identification information stored in S403, it indicates that the first control corresponding to the first identification information has been moved out of the window that is of the first application and that is displayed on the mobile phone, and the computer may delete the first control information corresponding to the first identification information. In this way, storage resources of the computer can be saved.

In this embodiment of this application, S409 and S410 are optional steps. When the first control information changes, S409 and S410 are performed after S402. When the first control information does not change, S409 and S410 are not performed.

As described in the video switching method described in S401 to S410 in the foregoing embodiment, according to the method provided in this embodiment of this application, the mobile phone can obtain information (for example, location information) about a control that is in the window for playing the portrait video stream on the mobile phone and that is used to play a video, that is, the first control information, and may transfer the first control information to the computer. In this way, when the window for playing a video stream on the mobile phone is switched from the portrait state to the landscape state, that is, is switched from playing the portrait video stream to playing the landscape video stream, the computer may determine, based on the third window information, the first control information, and the fourth window information, the transformation location of the third window in the process in which the computer switches from playing the portrait video stream to playing the landscape video stream, to generate and display the switching animation effect, so that the computer can smoothly switch between the two video streams.

It may be understood that, to implement the foregoing functions, the electronic device includes a corresponding hardware structure and/or software module for performing each function. A person skilled in the art should easily be aware that, in combination with algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the electronic device may be grouped into functional modules based on the foregoing method examples. For example, each functional module may be obtained through grouping based on each corresponding function, or two or more functions may be integrated into one processing module. The integrated module may be implemented in a form of hardware, or may be implemented in a form of a software functional module. It should be noted that, in embodiments of this application, module grouping is an example and is merely logical function grouping. During actual implementation, there may be another grouping manner.

An embodiment of this application further provides a video switching apparatus. The video switching apparatus may be the foregoing second electronic device (for example, the computer in the foregoing embodiment), or a chip or a system on chip in the second electronic device. The video switching apparatus may be configured to perform a function of the computer in the foregoing embodiment.

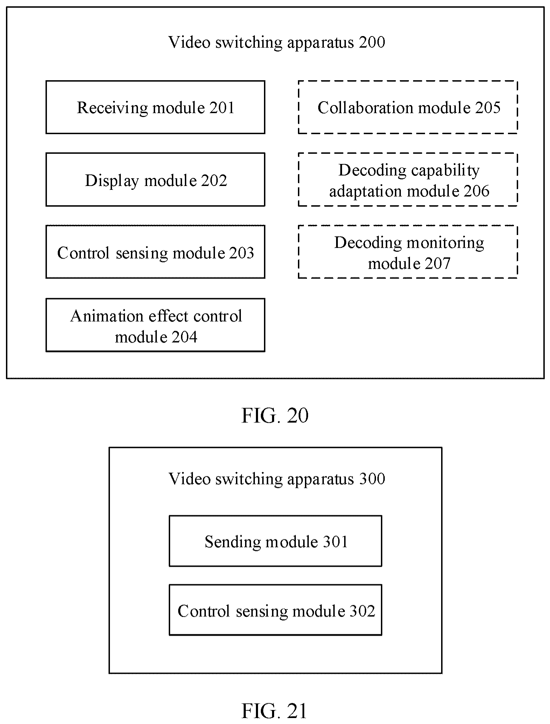

In a feasible implementation, as shown in FIG. 20, the video switching apparatus 200 includes: a receiving module 201, a display module 202, a control sensing module 203, and an animation effect control module 204. The receiving module 201 is configured to receive a first video stream, where the first video stream is display data present when a first electronic device displays a window of a first application in a first state. The display module 202 is configured to display the first video stream in a first window. The receiving module 201 is further configured to receive a second video stream, where the second video stream is display data present when the first electronic device displays the window of the first application in a second state. The control sensing module is configured to receive first control information, where the first control information is associated with a location of a first control in the window that is of the first application and that is displayed in the second state, and the first control is a control that is in the window of the first application and that is used to play a video. The animation effect control module 203 is configured to generate a switching animation effect based on first window information, the first control information, and second window information, where the first window information is associated with the first window, the second window information is associated with a location of the window that is of the first application and that is displayed in the second state on the first electronic device, the switching animation effect includes switching from displaying the window of the first application in the first state to displaying the window of the first application in the second state, and display content of the switching animation effect is related to the first application. The display module 202 is further configured to display the first video stream in a second window after display of the switching animation effect is completed, where the second window is associated with the second window information.

In some embodiments, the video switching apparatus 200 further includes: a collaboration module 205, a decoding capability adaptation module 206, and a decoding monitoring module 207. The collaboration module 205 is configured to establish a collaborative operation connection, to implement a collaborative operation function. The decoding capability adaptation module 206 is configured to obtain a decoding capability parameter, to determine a transformation speed of the switching animation effect. The decoding monitoring module 207 is configured to monitor an actual decoding capability parameter for a video stream, to update the decoding capability parameter.

An embodiment of this application further provides a video switching apparatus. The video switching apparatus may be the foregoing first electronic device (for example, the mobile phone in the foregoing embodiment), or a chip or a system on chip in the first electronic device. The video switching apparatus may be configured to perform a function of the mobile phone in the foregoing embodiment.

In a feasible implementation, as shown in FIG. 21, the video switching apparatus 300 includes: a sending module 301 and a control sensing module 302. The sending module 301 is configured to send a first video stream, where the first video stream is display data present when the first electronic device displays a window of a first application in a first state. The control sensing module 302 is configured to obtain and send first control information, where the first control information is associated with a location of a first control in the window that is of the first application and that is displayed in a second state, the first control is a control that is in the window of the first application and that is used to play a video, the first control information is used by the second electronic device to generate a switching animation effect, and the switching animation effect includes the second electronic device switching from displaying the window of the first application in the first state to displaying the window of the first application in the second state. The sending module 301 is further configured to send a second video stream, where the second video stream is display data present when the window of the first application is displayed in the second state.

An embodiment of this application further provides an electronic device. The electronic device may include a memory and one or more processors. The memory is coupled to the processor. The memory is configured to store computer program code. The computer program code includes computer instructions. When the processor executes the computer instructions, the electronic device may perform functions or steps performed by the mobile phone in the foregoing method embodiments, or the electronic device may perform functions or steps performed by the computer in the foregoing method embodiments. Certainly, the electronic device includes but is not limited to the memory and the one or more processors. For example, for a structure of the electronic device, refer to the structure of the electronic device shown in FIG. 5.

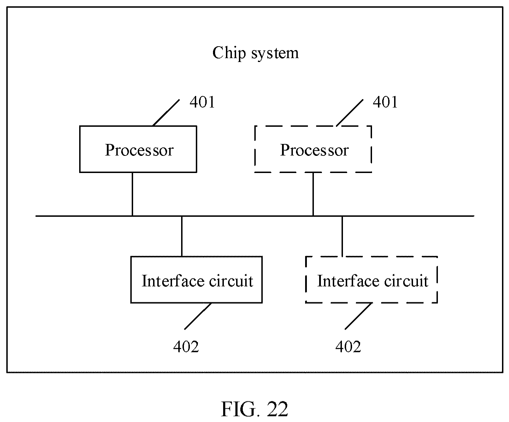

An embodiment of this application further provides a chip system. The chip system may be used in the electronic device in the foregoing embodiment. As shown in FIG. 22, the chip system includes at least one processor 401 and at least one interface circuit 402. The processor 401 may be a processor in the electronic device. The processor 401 and the interface circuit 402 may be interconnected through a line. The processor 401 may receive computer instructions from a memory of the electronic device through the interface circuit 402, and execute the computer instructions. When the computer instructions are executed by the processor 401, the electronic device may be enabled to perform steps performed by the mobile phone in the foregoing embodiments, or the electronic device may be enabled to perform steps performed by the computer in the foregoing embodiments. Certainly, the chip system may further include another discrete component. This is not specifically limited in this embodiment of this application.

An embodiment of this application further provides a computer-readable storage medium, configured to store computer instructions run by the foregoing electronic device.

An embodiment of this application further provides a computer program product, including computer instructions run by the foregoing electronic device.

The foregoing descriptions of the implementations allow a person skilled in the art to clearly understand that, for the purpose of convenient and brief description, division into the functional modules is merely used as an example for description. During actual application, the foregoing functions may be allocated to different functional modules for implementation as required. In other words, an inner structure of the apparatus is divided into different functional modules to implement all or some of the functions described above.

In several embodiments provided in this application, it should be understood that the disclosed apparatuses and methods may be implemented in other manners. For example, the described apparatus embodiments are merely examples. For example, division into the modules or units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

Units described as separate parts may or may not be physically separate, and parts displayed as units may be one or more physical units, that is, may be located in one place, or may be distributed to different places. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing content is merely specific implementations of this application, but is not intended to limit the protection scope of this application. Any variation or replacement within the technical scope disclosed in this application shall fall within the protection scope of this application. Therefore, the protection scope of this application shall be subject to the protection scope of the claims.

**Claims**

1. A video switching method, applied to a second electronic device, wherein the method comprises:

   receiving a first video stream sent by a first electronic device, wherein the first video stream is display data present when the first electronic device displays a window of a first application in a first state;
   displaying the first video stream in a first window of the second electronic device;
   receiving a second video stream and first control information that are sent by the first electronic device, wherein the second video stream is display data present when the first electronic device displays the window of the first application in a second state, the first control information is associated with a location of a first control in the window that is of the first application and that is displayed in the second state, and the first control is a control that is in the window of the first application and that is used to play a video;
   generating a switching animation effect based on first window information, the first control information, and second window information, wherein the first window information is associated with the first window, the second window information is associated with a location of the window that is of the first application and that is displayed in the second state on the first electronic device, the switching animation effect comprises the second electronic device switching from displaying the window of the first application in the first state to displaying the window of the first application in the second state, and display content of the switching animation effect is related to the first application; and
   displaying the first video stream in a second window of the second electronic device after display of the switching animation effect is completed, wherein the second window is associated with the second window information.

2. The method according to claim 1, wherein the first control information is further associated with a size of the first control in the window that is of the first application and that is displayed in the second state.

3. The method according to claim 1 or 2, wherein the first window information is associated with at least one of a location or a size of the window that is of the first application and that is displayed in the first state on the first electronic device; and
   before displaying the first video stream in the first window of the second electronic device, the method further comprises:
   receiving at least one of the location or the size, sent by the first electronic device, of the window that is of the first application and that is displayed in the first state on the first electronic device.

4. The method according to any one of claims 1 to 3, wherein before generating the switching animation effect based on the first window information, the first control information, and the second window information, the method further comprises:
   receiving the location, sent by the first electronic device, of the window that is of the first application and that is displayed in the second state on the first electronic device.

**5.** The method according to any one of claims 1 to 4, wherein the second window information is further associated with a size of the window that is of the first application and that is displayed in the second state on the first electronic device; and
before generating the switching animation effect based on the first window information, the first control information, and the second window information, the method further comprises:
receiving the size, sent by the first electronic device, of the window that is of the first application and that is displayed in the second state on the first electronic device.

**6.** The method according to any one of claims 1 to 5, wherein before receiving the second video stream and the first control information that are sent by the first electronic device, the method further comprises:
receiving a switching instruction, wherein the switching instruction indicates that the first electronic device undergoes a landscape/portrait state change.

**7.** The method according to claim 6, wherein if the first state is a landscape state, and the second state is a portrait state, the switching instruction indicates that the first electronic device switches from the landscape state to the portrait state.

**8.** The method according to any one of claims 1 to 7, wherein generating the switching animation effect based on the first window information, the first control information, and the second window information comprises:

scaling down the first window based on the first window information and the first control information, wherein a size and a location of the scaled-down first window are associated with the first control information; and
then scaling up the first window based on the second window information, wherein a size and a location of the scaled-up first window are associated with the second window information.

**9.** The method according to claim 8, wherein scaling down the first window based on the first window information and the first control information comprises:
scaling down the first window to a first point, wherein the first point is determined based on the first control information.

**10.** The method according to claim 9, wherein the first point is a central point of the first control in the window that is of the first application and that is displayed in the second state on the second electronic device.

**11.** The method according to any one of claims 8 to 10, wherein when the first window is scaled down, one or more of the following animation effects are displayed: rotation, fade-in and fade-out, and fly-in and fly-out; and when the first window is scaled up, one or more of the following animation effects are displayed: rotation, fade-in and fade-out, and fly-in and fly-out.

**12.** The method according to any one of claims 1 to 11, wherein the display content of the switching animation effect is one or more of a last-frame image of the first video stream, a first-frame image of the second video stream, a mask image, a preset image, and a preset video.

**13.** The method according to any one of claims 8 to 12, wherein the method further comprises:

scaling down the first window at a first speed, and then scaling up the first window at a second speed, wherein
the first speed and the second speed are determined based on a buffering capability and a decoding capability of the second electronic device, the buffering capability of the second electronic device represents a capability of the second electronic device to buffer a video stream, and the decoding capability of the second electronic device represents a capability of the second electronic device to decode a video stream.

**14.** The method according to claim 13, wherein generating the switching animation effect based on the first window information, the first control information, and the second window information further comprises:

determining a moving distance based on the first window information, the first control information, and the second window information;
determining moving time based on the buffering capability and the decoding capability of the second electronic device; and
determining the first speed and the second speed based on the moving distance and the moving time.

**15.** The method according to claim 14, wherein the moving distance comprises a first distance and a second distance, and the moving time comprises first time and second time; and
determining the first speed and the second speed based on the moving distance and the moving time comprises:

determining the first distance based on the first window information and the first control information, and determining the second distance based on the first control information and the second window information;

determining the first time based on the buffering capability of the second electronic device;

determining the second time based on the decoding capability of the second electronic device;

determining a first estimated speed based on the first distance and the first time, and determining a second estimated speed based on the second distance and the second time; and

when the first estimated speed is less than or equal to the second estimated speed, determining that both the first speed and the second speed are the first estimated speed; or

when the first estimated speed is greater than the second estimated speed, determining that both the first speed and the second speed are the second estimated speed.

16. The method according to claim 14, wherein the moving distance comprises a first distance and a second distance, and the moving time comprises first time and second time; and

determining the first speed and the second speed based on the moving distance and the moving time comprises:

determining the first distance based on the first window information and the first control information, and determining the second distance based on the first control information and the second window information;

determining the first time based on the decoding capability of the second electronic device;

determining the second speed based on the second distance and the first time;

determining the second time based on the first distance and the second speed;

determining the third time based on the buffering capability of the second electronic device; and

when the second time is greater than or equal to the third time, determining that the first speed is the same as the second speed; or

when the second time is less than the third time, determining the first speed based on the first distance and the third time.

17. A video switching method, applied to a first electronic device, wherein the method comprises:

sending a first video stream, wherein the first video stream is display data present when the first electronic device displays a window of a first application in a first state;

obtaining first control information, wherein the first control information is associated with a location of a first control in the window that is of the first application and that is displayed in a second state, and the first control is a control that is in the window of the first application and that is used to play a video; and

sending a second video stream and the first control information, wherein the second video stream is display data present when the first electronic device displays the window of the first application in the second state, the first control information is used by a second electronic device to generate a switching animation effect, and the switching animation effect comprises the second electronic device switching from displaying the window of the first application in the first state to displaying the window of the first application in the second state.

18. The method according to claim 17, wherein the first control information is further associated with a size of the first control in the window that is of the first application and that is displayed in the second state.

19. The method according to claim 17 or 18, wherein before sending the second video stream and the first control information, the method further comprises:

obtaining at least one of a location or a size of the window that is of the first application and that is displayed in the first state on the first electronic device; and

sending at least one of the location or the size of the window that is of the first application and that is displayed in the first state on the first electronic device, wherein at least one of the location or the size of the window that is of the first application and that is displayed in the first state on the first electronic device is used to determine first window information, and the first window information is used by the second electronic device to generate the switching animation effect.

20. The method according to any one of claims 17 to 19, wherein before sending the second video stream and the first control information, the method further comprises:

obtaining at least one of a location or a size of the window that is of the first application and that is displayed in the second state on the first electronic device; and

sending at least one of the location or the size of the window that is of the first application and that is displayed in the second state on the first electronic device, wherein at least one of the location or the size of the window that is of the first application and that is displayed in the second state on the first electronic device is used to determine second window information, and the second window information is used by the second electronic device to generate the switching animation effect.

21. The method according to any one of claims 17 to 20, wherein before sending the second video stream and the first control information, the method further comprises:
sending a switching instruction, wherein the switching instruction indicates that the first electronic device undergoes a landscape/portrait state change.

22. The method according to any one of claims 17 to 21, wherein if the first state is a landscape state, and the second state is a portrait state, the switching instruction indicates that the first electronic device switches from the landscape state to the portrait state.

23. An electronic device, comprising a memory and one or more processors, wherein the memory is coupled to the processor, the memory stores computer program code, the computer program code comprises computer instructions, and when the computer instructions are executed by the processor, the electronic device is enabled to perform the method according to any one of claims 1 to 16, or the electronic device is enabled to perform the method according to any one of claims 17 to 22.

24. A computer-readable storage medium, comprising computer instructions, wherein when the computer instructions are run on an electronic device, the electronic device is enabled to perform the method according to any one of claims 1 to 16, or the electronic device is enabled to perform the method according to any one of claims 17 to 22.

First electronic device

Screen projection

Video a

Second electronic device

FIG. 1

EP 4 664 896 A1

FIG. 2

EP 4 664 896 A1

FIG. 3

EP 4 664 896 A1

EP 4 664 896 A1

| Mobile phone | First video stream | | Second video stream | → |

The mobile phone performs a switching animation effect

Send the first video stream

Send the second video stream and **first control information**

| Computer | Buffer data of the first video stream and decode the data | Play the first video stream in a first window | Buffer data of the second video stream and decode the data | Play the second video stream in a second window | → |

Obtain a decoding capability parameter

**Display the switching animation effect** based on first window information, the first control information, and second window information

FIG. 4

Electronic device 100

Antenna 1                                                    Antenna 2

| Mobile communication module 2G/3G/4G/5G [150] | Wireless communication module BT/WLAN/GNSS/NFC/IR/FM [160] |

| Speaker [170A] | | Interface for external memory [120] |
| Receiver [170B] | Audio module [170] | Internal memory [121] |
| Microphone [170C] | | Sensor module [180] |
| Headset jack [170D] | | Cameras 1 to N [193] |
| Button [190] | Processor [110] | Displays 1 to N [194] |
| Motor [191] | | SIM card interfaces 1 to N [195] |
| Indicator [192] | | |

| USB interface [130] | Charging management module [140] | Power management module [141] |
| Charging input | | Battery [142] |

FIG. 5

| Application layer | Camera | Calendar | Maps | WLAN | Music | Messaging |
|---|---|---|---|---|---|---|
| | Gallery | Phone | Navigation | Bluetooth | Videos | ... |

| Application framework layer | Window manager | Content provider | Phone manager | Resource manager |
|---|---|---|---|---|
| | Notification manager | View system | **Collaboration module** | **Control sensing module** |
| | **Animation effect control module** | **Decoding capability adaptation module** | **Decoding monitoring module** | ... |

| System library | Surface manager | Three-dimensional graphics processing library | Android runtime |
|---|---|---|---|
| | Two-dimensional graphics engine | Media library | ... |

| Kernel layer | Display driver | Camera driver |
|---|---|---|
| | Audio driver | Sensor driver | ... |

FIG. 6

FIG. 7

EP 4 664 896 A1

Switching instruction

Mobile phone–side video streams

Send a landscape video stream

Obtain a decoding capability parameter

Send data of a portrait video stream and first control information

A computer plays the landscape video stream

Buffer the landscape video stream

Decode the landscape video stream

Play the landscape video stream in a first window

Determine a switching animation effect based on first window information, the first control information, and second window information

Determine a moving speed of the switching animation effect based on the decoding capability parameter

The computer plays the portrait video stream

Buffer the portrait video stream

Decode the portrait video stream

Play the portrait video stream in a second window

FIG. 8

Mobile phone

Computer

S101: Establish a collaborative operation connection

S102: Send a landscape video stream

S103: Receive the landscape video stream, and display the landscape video stream in a first window

S104: Send a portrait video stream and first control information in response to a switching instruction

S107: Obtain a decoding capability parameter

S105: Receive the portrait video stream and the first control information, and generate and display a switching animation effect based on first window information, the first control information, and second window information in response to a switching instruction

S106: Display the portrait video stream in a second window after display of the switching animation effect is completed

S108: After the computer displays the switching animation effect, obtain an actual decoding capability parameter for decoding the portrait video stream, and update the original decoding capability parameter

FIG. 9

FIG. 10

101

a    (l, r)                                        b

102

h

d                        w                         c

FIG. 11

EP 4 664 896 A1

$(l_1, r_1, w_1, h_1)$

~TO
FIG. 12B

102

~TO
FIG. 12B

Comments  Favorites  Download  Share

Episodes                        Introduction>

| 1 | 2 | ▶ | 4 | 5 | ... |

More videos>

XXXXX      XXXXX      XXXXX

Mobile phone

FIG. 12A

EP 4 664 896 A1

CONT.
FROM
FIG. 12A
~

CONT.
FROM
FIG. 12A
~

$(l_1', r_1', w_1', h_1')$

102'

5G 5G 8:00

Comments Favorites Download Share

Episodes                          Introduction>

1  2  ▶  4  5  ...

More videos>

XXXXX    XXXXX    XXXXX

Computer

FIG. 12B

FIG. 13A

200

210

~ TO
FIG. 13B

~ TO
FIG. 13B

~ TO
FIG. 13B

EP 4 664 896 A1

200

This PC

Recycle bin    Fil

Music    S

Browser    Gallery    Document 2

Start                    Sunday, January 1, 2023       12:00:00    Weather: Sunny

FIG. 13B

EP 4 664 896 A1

TO FIG. 13D

220

200

This PC

Email    Software 1

Recycle bin    File manager    Software 2

Music    Settings    Document 1

Browser    Gallery    Document 2

Start    Sunday, January 1, 2023    12:00:00    Weather: Sunny

CONT. FROM FIG. 13B

CONT. FROM FIG. 13B

FIG. 13C

FIG. 13D

EP 4 664 896 A1

200

CONT.
FROM
FIG. 13D

This PC    Email    Software 1

Recycle bin   File manager   Software 2

Music    Settings    Document 1

Browser    Gallery    Document 2

Start          Sunday, January 1, 2023          12:00:00 Weather: Sunny

~
TO
FIG. 13F

~
TO
FIG. 13F

FIG. 13E

EP 4 664 896 A1

200

This PC    Email    Software 1

Recycle bin    File manager    Software 2

Music    Settings    Document 1

Browser    Gallery    Document 2

Comments  Favorites  Download  Share

Episodes                Introduction>

1  2  ▶  4  5  ...

More videos>

Start    Sunday, January 1, 2023    12:00:00 Weather: Sunny

FIG. 13F

CONT. FROM FIG. 13F

CONT. FROM FIG. 13F

200

230

This PC

Email

Software 1

Recycle bin

File manager

Software 2

Music

Settings

Document 1

Browser

Gallery

Document 2

Start

Sunday, January 1, 2023

12:00:00 Weather: Sunny

8:00

Comments Favorites Download Share

Episodes

Introduction>

1 2 ▲ 4 5 ···

More videos>

xxxx xxxx xxxx

FIG. 13G

$(l_0, r_0, w_0, h_0)$

200

201

~ TO FIG. 14B

~ TO FIG. 14B

~ TO FIG. 14B

FIG. 14A

EP 4 664 896 A1

CONT.
FROM
FIG. 14A
~

CONT.
FROM
FIG. 14A

CONT.
FROM
FIG. 14A
~

200

This PC

Recycle bin   Fil

Music        S

Browser   Gallery   Document 2

Start                Sunday, January 1, 2023        12:00:00 Weather: Sunny

FIG. 14B

FIG. 14C

$(l_1', r_1', w_1', h_1')$

200

202

This PC

Email

Software 1

Recycle bin

File manager

Software 2

Music

Settings

Document 1

Browser

Gallery

Document 2

Start

Sunday, January 1, 2023

12:00:00 Weather: Sunny

EP 4 664 896 A1

200

This PC          Email          Software 1

Recycle bin   File manager   Software 2

Music          Settings       Document 1

Browser        Gallery        Document 2

Comments  Favorites  Download  Share

Start                    Sunday, January 1, 2023          12:00:00 Weather: Sunny

EP 4 664 896 A1

FIG. 14D

CONT. FROM FIG. 14D ~

200

CONT. FROM FIG. 14D ~

This PC  Email  Software 1

Recycle bin  File manager  Software 2

Music  Settings  Document 1

Browser  Gallery  Document 2

Comments  Favorites  Download  Share

Episodes  Introduction>

1  2  ▶  4  5  ...

More videos>

Start  Sunday, January 1, 2023  12:00:00 Weather: Sunny

FIG. 14E

FIG. 14F

$(l_2, r_2, w_2, h_2)$

200     203

CONT. FROM FIG. 14E ~

CONT. FROM FIG. 14E ~

CONT. FROM FIG. 14E ~

This PC    Email    Software 1

Recycle bin    File manager    Software 2

Music    Settings    Document 1

Browser    Gallery    Document 2

Start      Sunday, January 1, 2023      12:00:00 Weather: Sunny

5G 5G     8:00

Comments   Favorites   Download   Share

Episodes      Introduction>

1 2 4 5 ...

More videos>

XXXXX    XXXXX    XXXXX

FIG. 15

| Mobile phone | | Computer |
|---|---|---|

S401: Establish a collaborative operation connection

S402: Send a portrait video stream and first control information

S403: Receive the portrait video stream and the first control information, display the portrait video stream in a third window, and store the first control information

S409: Detect the first control information in real time

Send updated first control information to the computer when the first control information changes

S410: Receive the updated first control information, and store the updated first control information

S404: Send a landscape video stream to the computer in response to a switching instruction

S407: Obtain a decoding capability parameter

S405: Receive the landscape video stream, and generate and display a switching animation effect based on third window information, the first control information, and fourth window information in response to a switching instruction

S406: The computer displays the landscape video stream in a fourth window after display of the switching animation effect is completed

S408: After the computer displays the switching animation effect, obtain an actual decoding capability parameter for decoding the landscape video stream, and update the original decoding capability parameter

FIG. 16

FIG. 17A

FIG. 17B

EP 4 664 896 A1

200

This PC  Email  Software 1

Recycle bin  File manager  Software 2

Music  Settings  Document 1

Browser  Gallery  Document 2

Start          Sunday, January 1, 2023          12:00:00 Weather: Sunny

FIG. 17C

EP 4 664 896 A1

200

320

CONT.
FROM
FIG. 17C
~

CONT.
FROM
FIG. 17C
~

This PC

Email

Software 1

Recycle bin

File manager

Software 2

Music

Settings

Document 1

Browser

Gallery

Document 2

Start

Sunday, January 1, 2023

12:00:00 Weather: Sunny

~
TO
FIG. 17E

~
TO
FIG. 17E

FIG. 17D

200

This PC          Email

Recycle bin     File mana

Music           Settings

Browser         Gallery      Document 2

Start                    Sunday, January 1, 2023              12:00:00 Weather: Sunny

FIG. 17E

EP 4 664 896 A1

200    330

CONT.
FROM
FIG. 17E

CONT.
FROM
FIG. 17E

CONT.
FROM
FIG. 17E

Start          Sunday, January 1, 2023      12:00:00 Weather: Sunny

FIG. 17F

FIG. 18A

EP 4 664 896 A1

200

This PC

Email

Software 1

Recycle bin

File manager

Software 2

Music

Settings

Document 1

Browser

Gallery

Document 2

Comments    Favorites    Download    Share

Episodes                    Introduction>

| 1 | 2 | ▶ | 4 | 5 | ... |

More videos>

Start                Sunday, January 1, 2023          12:00:00 Weather: Sunny

FIG. 18B

200

$(l_1', r_1', w_1', h_1')$
302

This PC  Email  Software 1

Recycle bin  File manager  Software 2

Music  Settings  Document 1

Browser  Gallery  Document 2

Start   Sunday, January 1, 2023   12:00:00 Weather: Sunny

FIG. 18C

EP 4 664 896 A1

FIG. 18D

200

$(l_3, r_3, w_3, h_3)$
303

CONT.
FROM
FIG. 18D

CONT.
FROM
FIG. 18D

CONT.
FROM
FIG. 18D

Start

Sunday, January 1, 2023

12:00:00 Weather: Sunny

FIG. 18E

TO
FIG. 19B

FIG. 19A

FIG. 19B

Video switching apparatus 200

Receiving module 201

Collaboration module 205

Display module 202

Decoding capability
adaptation module 206

Control sensing module 203

Decoding monitoring
module 207

Animation effect control
module 204

FIG. 20

Video switching apparatus 300

Sending module 301

Control sensing module 302

FIG. 21

FIG. 22

## INTERNATIONAL SEARCH REPORT

| International application No. |
|---|
| **PCT/CN2024/071677** |

| | |
|---|---|
| **A.** | **CLASSIFICATION OF SUBJECT MATTER** |

H04N 21/43(2011.01)i

According to International Patent Classification (IPC) or to both national classification and IPC

| | |
|---|---|
| **B.** | **FIELDS SEARCHED** |

Minimum documentation searched (classification system followed by classification symbols)

IPC: H04N

Documentation searched other than minimum documentation to the extent that such documents are included in the fields searched

Electronic data base consulted during the international search (name of data base and, where practicable, search terms used)

CNABS: CNTXT; VEN; USTXT; EPTXT; WOTXT; CNKI; IEEE: 投屏, 投影, 屏幕共享, 屏幕协同, 多屏协同, 多屏互动, 横屏, 竖屏, 横向显示, 纵向显示, 切换, 转换, 视频, 播放, 平滑, 顺滑, 丝滑, 动效, 特效, screen projecting, screen sharing, screen collaboration, multi-screen interaction, landscape display, portrait display, horizontal screen, vertical screen, switch, transition, video, play, smooth, silk, special effect

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | WO 2022052772 A1 (HUAWEI TECHNOLOGIES CO., LTD.) 17 March 2022 (2022-03-17) description, page 1, paragraph 4-page 30, paragraph 4 | 1-7, 17-24 |
| A | CN 113206964 A (SHENZHEN KONKA ELECTRONIC TECHNOLOGY CO., LTD.) 03 August 2021 (2021-08-03) entire document | 1-24 |
| A | CN 113395558 A (HISENSE VISUAL TECHNOLOGY CO., LTD.) 14 September 2021 (2021-09-14) entire document | 1-24 |
| A | CN 113553014 A (HUAWEI TECHNOLOGIES CO., LTD.) 26 October 2021 (2021-10-26) entire document | 1-24 |
| A | CN 114691064 A (HUAWEI TECHNOLOGIES CO., LTD.) 01 July 2022 (2022-07-01) entire document | 1-24 |

☑ Further documents are listed in the continuation of Box C.     ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **01 April 2024** | **15 April 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/071677** |

### C. DOCUMENTS CONSIDERED TO BE RELEVANT

| Category* | Citation of document, with indication, where appropriate, of the relevant passages | Relevant to claim No. |
| --- | --- | --- |
| A | CN 115437545 A (GUANGDONG OPPO MOBILE TELECOMMUNICATIONS CORP., LTD.) 06 December 2022 (2022-12-06)<br>entire document | 1-24 |

Form PCT/ISA/210 (second sheet) (July 2022)

**INTERNATIONAL SEARCH REPORT**
Information on patent family members

| International application No. |
| --- |
| **PCT/CN2024/071677** |

| Patent document cited in search report | | | Publication date (day/month/year) | Patent family member(s) | Publication date (day/month/year) |
| --- | --- | --- | --- | --- | --- |
| WO | 2022052772 | A1 | 17 March 2022 | None | |
| CN | 113206964 | A | 03 August 2021 | None | |
| CN | 113395558 | A | 14 September 2021 | None | |
| CN | 113553014 | A | 26 October 2021 | None | |
| CN | 114691064 | A | 01 July 2022 | None | |
| CN | 115437545 | A | 06 December 2022 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310341966